# EUROPEAN PATENT APPLICATION

(11) **EP 4 746 522 A1**
(43) Date of publication of application: **20.05.2026**
(21) Application number: 24848057.6
(22) Date of filing: 19.07.2024
(51) Int. Cl.: H04W 40/22

(54) **COMMUNICATION METHOD AND APPARATUS**

(30) Priority: 31.07.2023 CN 202310953301
(71) Applicant: Huawei Technologies Co., Ltd., Shenzhen, Guangdong 518129 (CN)
(72) Inventor: XIA, Yuan, Shenzhen, Guangdong 518129 (CN); YU, Youyang, Shenzhen, Guangdong 518129 (CN)
(74) Representative: Gill Jennings & Every LLP
(86) International application number: PCT/CN2024/106560
(87) International publication number: WO 2025/026098

(57) **Abstract**

This application provides a communication method and apparatus, and belongs to the field of communication technologies. In the method, a first terminal over 3GPP access may be reused, and an identifier of a user plane network element for a second terminal may be obtained from a network, so that the second terminal directly communicates with the user plane network element through a non-3GPP access side connection, in other words, directly establishes a user plane connection by bypassing an N3G access gateway. In this way, the N3G access gateway may not be deployed in the network, and the terminal may not support transmission of a NAS message over N3G access, so that a user plane connection over non-3GPP access can be established at reduced costs.

## Description

This application claims priority to Chinese Patent Application No. 202310953301.5, filed with the China National Intellectual Property Administration on July 31, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, a 5th generation (5th generation, 5G) mobile communication core network (core network, CN), namely, the 5GC, supports non-3rd generation partnership project (non-3rd generation partnership project, non-3GPP) access, N3G access for short, for example, untrusted non-3GPP access and trusted non-3GPP access. The untrusted non-3GPP access is specifically, for example, untrusted wireless local area network (wireless local area network, WLAN) access. The trusted non-3GPP access is specifically, for example, trusted WLAN access and wired network access, and is specifically, for example, fixed home network access. Regardless of which non-3GPP access is used, an N3G access gateway, for example, a non-3GPP interworking function (non-3GPP interworking function, N3IWF), used for non-3GPP access needs to be deployed in a network, for access of a user equipment (user equipment, UE) through the N3G access gateway, and then a user plane connection of the UE to the N3G access gateway is established.

However, implementation costs of establishment of the user plane connection to the N3G access gateway are high. To be specific, the N3G access gateway needs to be deployed in the network, and the UE also needs to support transmission of a non-access stratum (non-access stratum, NAS) message over N3G access. Therefore, how to establish a user plane connection over non-3GPP access at reduced costs is a problem that needs to be urgently resolved currently.

### SUMMARY

Embodiments of this application provide a communication method and apparatus, to establish a user plane connection over non-3GPP access at reduced costs.

To achieve the foregoing objective, the following technical solutions are used in this application.

According to a first aspect, a communication method is provided and applied to a first terminal. The method includes: When the first terminal accesses a network over 3rd generation partnership project 3GPP access, the first terminal sends an identifier of a second terminal to the network, and receives an identifier that is of a user plane network element supporting non-3GPP access and that is returned by the network, where the second terminal has a non-3GPP access capability, and the identifier of the user plane network element is identification information of the user plane network element connected to the second terminal through a non-3GPP access side. The 3rd generation partnership project 3GPP access is long term evolution LTE access, 5G access, new radio NR access, or the like.

It can be learned that, the first terminal over 3GPP access may be reused, and the identifier of the user plane network element for the second terminal may be obtained from the network, so that the second terminal directly communicates with the user plane network element through the non-3GPP access side connection, in other words, directly establishes a user plane connection by bypassing an N3G access gateway. In this way, the N3G access gateway may not be deployed in the network, and the terminal may not support transmission of a non-access stratum NAS message over N3G access, so that a user plane connection over non-3GPP access can be established at reduced costs.

In a possible design solution, that the first terminal sends the identifier of the second terminal to the network includes: The first terminal sends a first NAS message to an access and mobility management network element, where the first NAS message is used by the first terminal to request to establish a session, and the first NAS message carries the identifier of the second terminal. Optionally, that the first terminal receives the identifier that is of the user plane network element and that is returned by the network for the identifier of the second terminal includes: The first terminal receives a second NAS message returned by the access and mobility management network element, where the second NAS message indicates that the session is successfully established, and the second NAS message carries the identifier of the user plane network element.

It may be understood that, because selection of a user plane network element is involved in a session establishment process, the first terminal may reuse an existing session establishment procedure, to select, in a case of 3GPP access, a user plane network element used for non-3GPP access, and obtain an identifier of the user plane network element. In comparison with an implementation using a newly defined procedure, this implementation is simpler and costs fewer communication overheads. Certainly, a newly defined procedure may alternatively be used for implementation, to implement decoupling from the existing procedure, and information element transfer is more flexible.

In another possible design solution, that the first terminal sends the identifier of the second terminal to the network includes: The first terminal sends a first message of a user plane to the user plane network element, where the first message carries the identifier of the second terminal. Optionally, that the first terminal receives the identifier that is of the user plane network element and that is returned by the network for the identifier of the second terminal includes: The first terminal receives a second message that is of the user plane and that is returned by the user plane network element, where the second message carries the identifier of the user plane network element.

It may be understood that, if the first terminal has been over 3GPP access and established the user plane connection, the first terminal may reuse a user plane message, for example, the first message and the second message, to directly obtain the identifier of the user plane network element from the user plane network element, in other words, reuse a user plane tunnel established via 3GPP, to obtain the identifier of the user plane network element used for non-3GPP access. In comparison with an implementation using a newly defined procedure, this implementation is simpler and costs fewer communication overheads. Certainly, a newly defined procedure may alternatively be used for implementation, to implement decoupling from the existing procedure, and information element transfer is more flexible.

In a possible design solution, when the first terminal and the second terminal are different terminals, the method according to the first aspect may further include: The first terminal obtains the identifier of the second terminal from the second terminal, in other words, may obtain the identifier of the second terminal as required, and does not need to always retain the identifier of the second terminal, so that storage overheads can be reduced. For example, the first terminal establishes a connection to the second terminal, and obtains the identifier of the second terminal through the connection. For example, the first terminal may request, from the second terminal through the connection, information that identifies the second terminal. In this way, the first terminal may receive, through the connection, the identifier that is of the second terminal and that is returned by the second terminal. Alternatively, in response to the establishment of the connection to the first terminal, the second terminal may actively send the identifier of the second terminal to the first terminal through the connection. Alternatively, the first terminal scans identification information (for example, a two-dimensional code identifier) of the second terminal to obtain the identifier of the second terminal.

In a possible design solution, when the first terminal and the second terminal are different terminals, the method according to the first aspect may further include: The first terminal sends, to the second terminal, at least one of the identifier of the user plane network element and a security vector that corresponds to the second terminal, where the security vector is information used when the second terminal establishes a secure connection of the user plane through the non-3GPP access side connection, so that the second terminal directly establishes a secure connection to the user plane network element through the non-3GPP access side connection.

Optionally, the security vector is carried in a NAS message or a message of the user plane that is sent by the network to the first terminal, in other words, the security vector may be obtained by reusing the session establishment or the user plane tunnel. In comparison with an implementation using a newly defined procedure, this implementation is simpler and costs fewer communication overheads. Certainly, a newly defined procedure may alternatively be used for implementation, to implement decoupling from the existing procedure, and information element transfer is more flexible.

In a possible design solution, when the first terminal and the second terminal are a same terminal, the method according to the first aspect may further include: When the first terminal accesses the network over non-3GPP access, the first terminal establishes the secure connection to the user plane network element based on the identifier of the user plane network element, in other words, directly establishes the user plane connection by bypassing the N3G access gateway, to establish the user plane connection over non-3GPP access at reduced costs.

Optionally, that the first terminal establishes the connection to the user plane network element based on the identifier of the user plane network element includes: The first terminal establishes the secure connection to the user plane network element based on the identifier of the user plane network element by using a security vector corresponding to the first terminal, to ensure communication security and avoid a security risk.

Optionally, the security vector is pre-configured locally in the first terminal, in other words, the security vector does not need to be obtained from another network element, to reduce communication overheads. Alternatively, the security vector is carried in a NAS message or a message of the user plane that is sent by the network to the first terminal, to implement flexible configuration by using signaling.

In a possible design solution, the identifier of the user plane network element is an internet protocol IP address of the user plane network element, so that the second terminal can directly access the user plane network element.

In a possible design solution, the identifier of the second terminal is used to select a network element of the user plane for the second terminal.

According to a second aspect, a communication method is provided and applied to a second terminal. The method includes: The second terminal receives an identifier of a user plane network element supporting non-3GPP access, where the identifier of the user plane network element is identification information of the user plane network element connected to the second terminal through a non-3rd generation partnership project 3GPP access side; and when the second terminal accesses a network over non-3GPP access, the second terminal establishes a connection to the user plane network element based on the identifier of the user plane network element. The non-3rd generation partnership project 3GPP access is wireless local area network WLAN access, fixed network access, wired access, or the like.

In a possible design solution, that the second terminal receives the identifier of the user plane network element includes: The second terminal receives the identifier of the user plane network element from an application function or a first terminal. Specifically, flexible selection may be performed based on an actual situation. This is not specifically limited.

Optionally, the method according to the second aspect may further include: The second terminal sends an identifier of the second terminal to the first terminal, to obtain the identifier of the user plane network element by sending the identifier of the second terminal to the network by the first terminal.

In a possible design solution, that the second terminal establishes the connection to the user plane network element based on the identifier of the user plane network element includes: The second terminal establishes, by using a security vector corresponding to the second terminal, a secure connection to the user plane network element based on the identifier of the user plane network element.

Optionally, the security vector is pre-configured locally in the second terminal, or the security vector is carried in a message from an application function or the first terminal. Specifically, selection may be performed based on an actual flexible situation. This is not specifically limited.

In a possible design solution, the identifier of the second terminal is used to select a network element of a user plane for the second terminal.

It may be understood that, for a related technical effect of the method according to the second aspect, refer to related descriptions of the another aspect. Details are not described herein again.

According to a third aspect, a communication method is provided and applied to a user plane network element supporting non-3GPP access. The method includes: The user plane network element receives an identifier of a second terminal, and sends an identifier that is of the user plane network element and that is allocated to the second terminal. The second terminal has a non-3GPP access capability, and the identifier of the user plane network element is identification information of the user plane network element connected to the second terminal through a non-3rd generation partnership project 3GPP access side.

In a possible design solution, that the user plane network element receives the identifier of the second terminal includes: The user plane network element receives a packet forwarding control protocol PFCP session establishment request message from a session management network element, where the PFCP session establishment request message carries the identifier of the second terminal. Correspondingly, that the user plane network element sends the identifier that is of the user plane network element and that is allocated to the second terminal includes: The user plane network element sends a PFCP session establishment response message to the session management network element, where the PFCP session establishment response message carries the identifier of the user plane network element.

Optionally, the PFCP session establishment request message further carries a security vector corresponding to the second terminal, in other words, the security vector required for establishing a user plane connection is configured for the user plane network element in advance, without needing to be derived by the user plane network element, so that overheads of the user plane network element can be reduced. Certainly, the user plane network element may alternatively derive the security vector. This is not limited.

In a possible design solution, that the user plane network element receives the identifier of the second terminal includes: The user plane network element receives a first message of a user plane from the first terminal, where the first message carries the identifier of the second terminal. Correspondingly, that the user plane network element sends the identifier that is of the user plane network element and that is allocated to the second terminal includes: The user plane network element sends a second message of the user plane to the first terminal, where the second message carries the identifier of the user plane network element.

Optionally, the method according to the third aspect may further include: The user plane network element sends a PFCP request message to a session management network element, and the user plane network element receives a PFCP response message from the session management network element, where the PFCP request message carries the identifier of the second terminal, and the PFCP response message carries a security vector corresponding to the second terminal. In other words, the user plane network element may actively request the session management network element to provide the security vector corresponding to the second terminal, to implement on-demand provision and avoid redundancy.

Further, the second message further carries the security vector corresponding to the second terminal; in other words, the security vector required for establishing a user plane connection is configured by the first terminal for the second terminal in advance, without needing to be derived by the second terminal. Therefore, this can reduce overheads of the second terminal and is more conductive to energy saving is more convenient. Certainly, the second terminal may alternatively derive the security vector. This is not limited.

In a possible design solution, the method according to the third aspect may further include: The user plane network element establishes a connection to the second terminal that is over non-3GPP access.

Optionally, that the user plane network element establishes the connection to the second terminal that is over non-3GPP access includes: The user plane network element receives a secure connection establishment request that is sent by the second terminal over non-3GPP access; and the user plane network element establishes a secure connection to the second terminal by using the security vector corresponding to the second terminal.

In a possible design solution, the first terminal and the second terminal are different terminals, or the first terminal and the second terminal are a same terminal.

In a possible design solution, the identifier of the user plane network element is an internet protocol IP address of the user plane network element.

In a possible design solution, the identifier of the second terminal is used to select a network element of the user plane for the second terminal.

It may be understood that, for a related technical effect of the method according to the third aspect, refer to related descriptions of the another aspect. Details are not described herein again.

According to a fourth aspect, a communication method is provided and applied to a session management network element. The method includes: The session management network element receives an identifier of a second terminal; and obtains, based on the identifier of the second terminal, an identifier of a user plane network element supporting non-3GPP access, and sends the identifier of the user plane network element. The second terminal has a non-3GPP access capability, and the identifier of the user plane network element is identification information of the user plane network element connected to the second terminal through a non-3rd generation partnership project 3GPP access side.

In a possible design solution, that the session management network element obtains the identifier of the user plane network element based on the identifier of the second terminal includes: The session management network element selects the user plane network element based on the identifier of the second terminal; and the session management network element determines the identifier of the user plane network element, or the session management network element obtains the identifier of the user plane network element from the user plane network element. For example, that the session management network element obtains the identifier of the user plane network element from the user plane network element includes: The session management network element sends a packet forwarding control protocol PFCP session establishment request message to the user plane network element, and receives a PFCP session establishment response message returned by the user plane network element. The PFCP session establishment request message carries the identifier of the second terminal, and the PFCP session establishment response message carries the identifier of the user plane network element.

It may be understood that an existing PFCP session establishment request message usually also carries the identifier of the second terminal. However, a difference from the conventional technology lies in that, in this embodiment of this application, although the identifier of the second terminal is reused, a capability of the identifier of the second terminal may be enhanced. For example, the identifier of the second terminal may implicitly indicate that the second terminal supports non-3GPP access, so that the user plane network element may allocate the identifier of the user plane network element to the second terminal based on a case in which the second terminal supports non-3GPP access, in other words, an existing information element is reused for implementation. Therefore, overheads can be reduced. Certainly, a newly defined information element may alternatively be used for implementation, to implement decoupling from the existing information element, and transfer is more flexible.

Optionally, the PFCP session establishment request message further carries a security vector corresponding to the second terminal, and the security vector is information used when the second terminal establishes a secure connection of a user plane through the non-3GPP access side connection.

In a possible design solution, that the session management network element receives the identifier of the second terminal includes: The session management network element receives a session establishment request message from an access and mobility management network element, where the access and mobility management network element is an access and mobility management network element accessed by a first terminal, and the session establishment request message carries the identifier of the second terminal. That the session management network element sends the identifier of the user plane network element includes: The session management network element sends a session establishment response message to the access and mobility management network element, where the session establishment response message carries the identifier of the user plane network element.

Optionally, the session establishment response message carries the security vector corresponding to the second terminal, and the security vector is the information used when the second terminal establishes the secure connection of the user plane through the non-3GPP access side connection.

Optionally, the first terminal and the second terminal are different terminals, or the first terminal and the second terminal are a same terminal. Specifically, flexible selection may be performed based on an actual situation. This is not limited.

In a possible design solution, that the session management network element receives the identifier of the second terminal includes: The session management network element receives the identifier of the second terminal from an application function, where the application function is an application function connected to the second terminal. That the session management network element sends the identifier of the user plane network element includes: The session management network element sends the identifier of the user plane network element to the application function. In this case, the identifier of the user plane network element may be directly transferred by the application function to the second terminal, without needing to be forwarded by a network, so that communication efficiency can be improved.

Optionally, the method according to the fourth aspect may further include: The session management network element obtains the security vector from a data management network element, the access and mobility management network element, or the application function. Specifically, flexible selection may be performed based on an actual situation. This is not limited.

In a possible design solution, the identifier of the user plane network element is an internet protocol IP address of the user plane network element.

In a possible design solution, the identifier of the second terminal is used to select a network element of the user plane for the second terminal.

It may be understood that, for a related technical effect of the method according to the fourth aspect, refer to related descriptions of the another aspect. Details are not described herein again.

According to a fifth aspect, a communication method is provided and applied to a session management network element. The method includes: The session management network element receives an identifier of a second terminal from a user plane network element supporting non-3GPP access; and the session management network element sends a security vector corresponding to the second terminal to the user plane network element based on the identifier of the second terminal. The second terminal has a non-3GPP access capability, the security vector is information used when the second terminal establishes a secure connection to a user plane through a non-3rd generation partnership project 3GPP access side connection, the user plane network element is a user plane network element connected to a first terminal, and the first terminal is a terminal that accesses a network over 3rd generation partnership project 3GPP access.

In a possible design solution, that the session management network element receives the identifier of the second terminal from the user plane network element includes: The session management network element receives a packet forwarding control protocol PFCP request message from the user plane network element, where the PFCP request message carries the identifier of the second terminal. Correspondingly, that the session management network element sends the security vector corresponding to the second terminal to the user plane network element based on the identifier of the second terminal includes: The session management network element sends a PFCP response message to the user plane network element based on the identifier of the second terminal, where the PFCP response message carries the security vector corresponding to the second terminal.

In a possible design solution, the first terminal and the second terminal are different terminals, or the first terminal and the second terminal are a same terminal.

In a possible design solution, the identifier of the second terminal is used to select a network element of the user plane for the second terminal.

It may be understood that, for a related technical effect of the method according to the fifth aspect, refer to related descriptions of the another aspect. Details are not described herein again.

According to a sixth aspect, a communication method is provided. The method includes: An access and mobility management network element receives an identifier of a second terminal from a first terminal, the access and mobility management network element sends the identifier of the second terminal to a session management network element, the session management network element sends the identifier of the second terminal to a user plane network element that supports non-3GPP access and that corresponds to the first terminal, the user plane network element sends, to the session management network element, an identifier that is of the user plane network element and that is allocated to the second terminal, the session management network element sends the identifier of the user plane network element to the access and mobility management network element, and the access and mobility management network element sends the identifier of the user plane network element to the first terminal. The first terminal is a terminal that accesses a network over 3rd generation partnership project 3GPP access, the second terminal has a non-3GPP access capability, and the identifier of the user plane network element is identification information of the user plane network element connected to the second terminal through a non-3GPP access side.

In a possible design solution, that the access and mobility management network element receives the identifier of the second terminal from the first terminal includes: The access and mobility management network element receives a first non-access stratum NAS message from the first terminal, where the first NAS message carries the identifier of the second terminal;

In a possible design solution, that the access and mobility management network element sends the identifier of the second terminal to the session management network element includes: The access and mobility management network element sends a session establishment request message to the session management network element, where the session establishment request message carries the identifier of the second terminal.

Optionally, the session establishment request message further carries a security vector corresponding to the second terminal, and the security vector is information used when the second terminal establishes a secure connection of a user plane through the non-3GPP access side connection.

Optionally, the method according to the sixth aspect may further include: The session management network element obtains the security vector from a data management network element, the access and mobility management network element, or an application function, where the security vector is the information used when the second terminal establishes the secure connection of the user plane through the non-3GPP access side connection.

In a possible design solution, that the session management network element sends the identifier of the second terminal to the user plane network element corresponding to the first terminal includes: The session management network element sends a packet forwarding control protocol PFCP session establishment request message to the user plane network element, where the PFCP session establishment request message carries the identifier of the second terminal.

In a possible design solution, that the user plane network element sends, to the session management network element, the identifier that is of the user plane network element and that is allocated to the second terminal includes: The user plane network element sends a PFCP session establishment response message to the session management network element, where the PFCP session establishment response message carries the identifier of the user plane network element.

In a possible design solution, that the session management network element sends the identifier of the user plane network element to the access and mobility management network element includes: The session management network element sends a session establishment response message to the access and mobility management network element, where the session establishment response message carries the identifier of the user plane network element.

Optionally, the session establishment response message further carries the security vector corresponding to the second terminal, and the security vector is the information used when the second terminal establishes the secure connection of the user plane through the non-3GPP access side connection.

In a possible design solution, that the access and mobility management network element sends the identifier of the user plane network element to the first terminal includes: The access and mobility management network element sends a second NAS message to the first terminal, where the second NAS message carries the identifier of the user plane network element.

In a possible design solution, the method according to the fifth aspect may further include: The user plane network element establishes a connection to the second terminal that is over non-3GPP access.

Optionally, that the user plane network element establishes the connection to the second terminal that is over non-3GPP access includes: The user plane network element receives a secure connection establishment request sent by the second terminal over non-3GPP access, and the user plane network element establishes a secure connection to the second terminal by using the security vector corresponding to the second terminal.

In a possible design solution, the identifier of the user plane network element is an internet protocol IP address of the user plane network element.

In a possible design solution, the first terminal and the second terminal are different terminals, or the first terminal and the second terminal are a same terminal.

In a possible design solution, the identifier of the second terminal is used to select a network element of the user plane for the second terminal.

It may be understood that, for a related technical effect of the method according to the sixth aspect, refer to related descriptions of the another aspect. Details are not described herein again.

According to a seventh aspect, a communication method is provided. The method includes: A user plane network element supporting non-3GPP access receives an identifier of a second terminal; the user plane network element sends the identifier of the second terminal to a session management network element; the session management network element receives the identifier of the second terminal from the user plane network element; the session management network element sends, to the user plane network element based on the identifier of the second terminal, a security vector corresponding to the second terminal; and the user plane network element receives the security vector corresponding to the second terminal from the session management network element. The second terminal has a non-3GPP access capability, the security vector is information used when the second terminal establishes a secure connection to a user plane through a non-3rd generation partnership project 3GPP access side connection.

In a possible design solution, that the user plane network element receives the identifier of the second terminal includes: The user plane network element receives a first message of the user plane from a first terminal, where the first terminal is a terminal that accesses a network over 3GPP access, and the first message carries the identifier of the second terminal.

Optionally, the method according to the seventh aspect may further include: The user plane network element sends a second message of the user plane to the first terminal, where the second message carries an identifier of the user plane network element, and the identifier of the user plane network element is identification information of the user plane network element connected to the second terminal through a non-3GPP access side.

Optionally, the second message is a message sent by the user plane network element when the user plane network element receives the security vector corresponding to the second terminal.

Optionally, the second message further carries the security vector corresponding to the second terminal.

In a possible design solution, that the user plane network element sends the identifier of the second terminal to the session management network element includes: The user plane network element sends a packet forwarding control protocol PFCP request message to the session management network element, where the PFCP request message carries the identifier of the second terminal. Correspondingly, that the session management network element receives the identifier of the second terminal from the user plane network element includes: The session management network element receives the PFCP request message from the user plane network element.

In a possible design solution, the session management network element sends, to the user plane network element based on the identifier of the second terminal, the security vector corresponding to the second terminal includes: The session management network element sends a PFCP response message to the user plane network element based on the identifier of the second terminal, where the PFCP response message carries the security vector corresponding to the second terminal. Correspondingly, that the user plane network element receives the security vector corresponding to the second terminal from the session management network element includes: The user plane network element receives the PFCP response message from the session management network element.

In a possible design solution, the method according to the seventh aspect may further include: The user plane network element establishes a connection to the second terminal that is over non-3GPP access.

Optionally, that the user plane network element establishes the connection to the second terminal that is over non-3GPP access includes: The user plane network element receives a secure connection establishment request sent by the second terminal over non-3GPP access, and the user plane network element establishes a secure connection to the second terminal by using the security vector corresponding to the second terminal.

In a possible design solution, the identifier of the user plane network element is an internet protocol IP address of the user plane network element.

In a possible design solution, the first terminal and the second terminal are different terminals, or the first terminal and the second terminal are a same terminal.

In a possible design solution, the identifier of the second terminal is used to select a network element of the user plane for the second terminal.

It may be understood that, for a related technical effect of the method according to the seventh aspect, refer to related descriptions of the another aspect. Details are not described herein again.

According to an eighth aspect, a communication method is provided and applied to a network. The method includes: The network receives an identifier of a second terminal from a first terminal; obtains, based on the identifier of the second terminal, an identifier of a user plane network element supporting non-3GPP access; and sends the identifier of the user plane network element to the first terminal. The second terminal has a non-3GPP access capability, and the identifier of the user plane network element is identification information of the user plane network element connected to the second terminal through a non-3rd generation partnership project 3GPP access side.

In a possible design solution, the identifier of the second terminal is carried in any one of the following: a first non-access stratum NAS message, a first message of a user plane, a create session request message, or a packet forwarding control protocol PFCP request message.

In a possible design solution, the identifier of the user plane network element is carried in any one of the following: a second NAS message, a second message of the user plane, a create session response message, or a PFCP response message.

In a possible design solution, the identifier of the user plane network element is an internet protocol IP address of the user plane network element.

In a possible design solution, the first terminal and the second terminal are different terminals, or the first terminal and the second terminal are a same terminal.

In a possible design solution, the identifier of the second terminal is used to select a network element of the user plane for the second terminal.

It may be understood that, for a related technical effect of the method according to the eighth aspect, refer to related descriptions of the another aspect. Details are not described herein again.

According to a ninth aspect, a communication method is provided and applied to an application function. The method includes: The application function obtains an identifier of a second terminal; obtains, from a network based on the identifier of the second terminal, an identifier of a user plane network element supporting non-3GPP access; and sends the identifier of the user plane network element to the second terminal. The second terminal has a non-3GPP access capability, and the identifier of the user plane network element is identification information of the user plane network element connected to the second terminal through a non-3rd generation partnership project 3GPP access side.

It can be learned that, the application function may actively obtain the identifier of the user plane network element from the network (for example, a session management network element in the network), and provide the identifier of the user plane network element for the terminal, so that the terminal directly communicates with the user plane network element through the non-3GPP access side connection, in other words, directly establishes a user plane connection by bypassing an N3G access gateway. In this way, the N3G access gateway may not be deployed in the network, and the user equipment UE may also not support transmission of a non-access stratum NAS message over N3G access, so that a user plane connection over non-3GPP access can be established at reduced costs.

In a possible design solution, that the application function obtains the identifier of the user plane network element from the network based on the identifier of the second terminal includes: The application function determines service information of the second terminal based on the identifier of the second terminal, sends information about the second terminal to the network, and receives the identifier that is of the user plane network element and that is returned by the network for the information about the second terminal. The information about the second terminal includes the identifier of the second terminal and the service information of the second terminal. In other words, the application function may provide information related to a service of the second terminal for the network, so that the network determines the user plane network element related to the service, and allocates the identifier of the user plane network element. In this way, a failure of the service caused by mismatching between the service and bearing of a user plane can be avoided.

Optionally, the service information of the second terminal is service information that is of the second terminal and that is related to a personal identification number PIN, or may be any other possible service, which may be selected based on an actual situation. This is not limited.

Optionally, the service information of the second terminal includes at least one of an identifier of a PIN, a data network name DNN, information about a slice, a security vector of the second terminal, and location information of the second terminal, so that the user plane network element determined by the network is a user plane network element that matches a security requirement and a location of the terminal, to ensure that bearing of the user plane for the service is secure and reliable.

Optionally, the method further includes: The application function sends the security vector of the second terminal to the second terminal, in other words, configures, for the terminal in advance, the security vector required for establishing the user plane connection, without needing to be derived by the terminal. Therefore, this can reduce overheads of the terminal and is more conductive to energy saving. Certainly, the terminal may alternatively derive the security vector. This is not limited.

Optionally, the information about the second terminal further includes: user plane identifier request indication information, where the user plane identifier request indication information is used to request the network to allocate a user plane network element identifier, and the user plane network element identifier is the identification information of the user plane network element connected to the terminal through the non-3GPP access side, in other words, the user plane identifier request indication information explicitly indicates the network to allocate the user plane network element identifier to the second terminal. In other words, if the user plane identifier request indication information is not provided for the network, the network does not allocate the user plane network element identifier, to implement on-demand allocation and avoid redundancy. Certainly, the user plane identifier request indication information is an optional information element. For example, the network may alternatively allocate the user plane network element identifier by default when receiving the information about the second terminal.

Optionally, that the application function obtains the identifier of the second terminal includes: The application function receives the identifier of the second terminal from the first terminal. In other words, if the second terminal has no capability of directly communicating with the application function, the first terminal may also act as a proxy for the second terminal for communicating with the application function, so that a requirement of the second terminal can be finally transferred to the application function.

Further, when the application function sends the information about the second terminal to the network, the method further includes: The application function sends an identifier of the first terminal to the network. The identifier of the first terminal is used to determine a network element serving the first terminal, and/or indicate that the network needs to store the information about the second terminal in the network element serving the first terminal. In other words, because the second terminal may also has no capability of communicating with the network, the network may not have a network serving the second terminal. Therefore, the information about the second terminal may be stored in a corresponding network element of a proxy (for example, the first terminal) for the second terminal for communication, to avoid information loss of the second terminal.

In a possible design solution, the identifier of the user plane network element is an internet protocol IP address of the user plane network element, so that the second terminal can directly access the user plane network element.

In a possible design solution, the identifier of the second terminal is used to select a network element of the user plane for the second terminal.

According to a tenth aspect, a communication method is provided and applied to a capability exposure network element. The method includes: The capability exposure network element receives information about a second terminal and an identifier of a first terminal that are from an application function; and the capability exposure network element determines, based on the identifier of the first terminal, a network element serving the first terminal, and stores the information about the second terminal in the network element serving the first terminal.

In a possible design solution, the information about the second terminal includes an identifier of the second terminal and service information of the second terminal.

Optionally, the service information of the second terminal is service information that is of the second terminal and that is related to a personal identification number PIN.

Optionally, the service information of the second terminal includes at least one of an identifier of a PIN, a data network name DNN, information about a slice, a security vector of the second terminal, and location information of the second terminal.

Optionally, the second terminal has a non-3GPP access capability, the information about the second terminal further includes user plane identifier request indication information, the user plane identifier request indication information is used to request a network to allocate a user plane network element identifier, and the user plane network element identifier is identification information of a user plane network element connected to the terminal through a non-3rd generation partnership project 3GPP access side.

In a possible design solution, the identifier of the second terminal is used to select a network element of a user plane for the second terminal.

It may be understood that, for a related technical effect of the method according to the tenth aspect, refer to related descriptions of the another aspect. Details are not described herein again.

According to an eleventh aspect, a communication method is provided and applied to a session management network element. The method includes: The session management network element obtains information about a second terminal; obtains, based on the information about the second terminal, an identifier of a user plane network element that supports non-3GPP access and that corresponds to the second terminal; and sends the identifier of the user plane network element. The second terminal has a non-3GPP access capability, and the identifier of the user plane network element is identification information of the user plane network element connected to the second terminal through a non-3rd generation partnership project 3GPP access side.

In a possible design solution, the information about the second terminal includes an identifier of the second terminal and service information of the second terminal.

Optionally, the service information of the second terminal is service information that is of the second terminal and that is related to a personal identification number PIN.

Optionally, the service information of the second terminal includes at least one of an identifier of a PIN, a data network name DNN, information about a slice, a security vector of the second terminal, and location information of the second terminal.

Optionally, the information about the second terminal further includes user plane identifier request indication information, the user plane identifier request indication information is used to request a network to allocate the user plane network element identifier, and the user plane network element identifier is the identification information of the user plane network element connected to the terminal through the non-3GPP access side.

Optionally, that the session management network element obtains, based on the information about the second terminal, the identifier that is of the user plane network element and that corresponds to the second terminal includes: The session management network element selects the user plane network element based on the information about the second terminal. The session management network element sends a packet forwarding control protocol PFCP session establishment request message to the user plane network element, and receives a PFCP session establishment response message returned by the user plane network element for the PFCP session establishment request message. The identifier that is of the second terminal and that is carried in the PFCP session establishment request message is used to request to allocate, to the second terminal, the identification information that identifies the user plane network element connected to the second terminal through the non-3GPP access side. The PFCP session establishment response message carries the identifier of the user plane network element.

Optionally, the PFCP session establishment request message further carries the security vector of the second terminal, and the security vector is information used when the second terminal establishes a secure connection of a user plane through the non-3GPP access side connection.

In a possible design solution, that the session management network element obtains the information about the second terminal includes: The session management network element receives information about a service from a first terminal, and obtains, based on the information about the service (for example, at least one of the identifier of the PIN, the DNN, and the information about the slice), the information about the second terminal from a network element serving the first terminal. The information about the service is information about a service related to the second terminal. It may be understood that, when the first terminal acts as a proxy for the second terminal for communication, the information about the second terminal may be stored in the network element serving the first terminal, so that the session management network element may obtain the information about the second terminal from the network element when required.

Optionally, that the session management network element sends the identifier of the user plane network element includes: The session management network element sends the identifier of the second terminal and the identifier of the user plane network element to the network element serving the first terminal. Correspondingly, the network element serving the first terminal may return the identifier of the second terminal and the identifier of the user plane network element to an application function, and the application function finally delivers the identifier of the second terminal and the identifier of the user plane network element to the second terminal, to ensure that the second terminal can obtain the identifier of the user plane network element.

In a possible design solution, the identifier of the user plane network element is an internet protocol IP address of the user plane network element.

In a possible design solution, the identifier of the second terminal is used to select a network element of the user plane for the second terminal.

It may be understood that, for a related technical effect of the method according to the eleventh aspect, refer to related descriptions of the another aspect. Details are not described herein again.

According to a twelfth aspect, a communication method is provided and applied to a user plane network element supporting non-3GPP access. The method includes: The user plane network element receives an identifier of a second terminal from a session management network element, and allocates an identifier of the user plane network element to the second terminal based on the identifier of the second terminal. The second terminal has a non-3GPP access capability, and the identifier of the user plane network element is identification information of the user plane network element connected to the second terminal through a non-3rd generation partnership project 3GPP access side.

In a possible design solution, that the user plane network element receives the identifier of the second terminal from the session management network element includes: The user plane network element receives a packet forwarding control protocol PFCP session establishment request message from the session management network element, where the PFCP session establishment request message carries the identifier of the second terminal.

Optionally, the PFCP session establishment request message further carries a security vector of the second terminal.

In a possible design solution, that the user plane network element allocates the identifier of the user plane network element to the second terminal based on the identifier of the second terminal includes: The user plane network element sends a PFCP session establishment response message to the session management network element based on the identifier of the second terminal, where the PFCP session establishment response message carries the identifier of the user plane network element.

In a possible design solution, the method further includes: The user plane network element establishes a connection to the second terminal that is over non-3GPP access.

Optionally, that the user plane network element establishes the connection to the second terminal that is over non-3GPP access includes: The user plane network element receives a secure connection establishment request sent by the second terminal over non-3GPP access; and the user plane network element establishes a secure connection to the second terminal by using the security vector of the second terminal.

In a possible design solution, the identifier of the user plane network element is an internet protocol IP address of the user plane network element.

In a possible design solution, the identifier of the second terminal is used to select a network element of the user plane for the second terminal.

It may be understood that, for a related technical effect of the method according to the twelfth aspect, refer to related descriptions of the another aspect. Details are not described herein again.

According to a thirteenth aspect, a communication method is provided. The method includes: A session management network element obtains information about a second terminal; the session management network element determines, based on the information about the second terminal, a user plane network element that supports non-3GPP access and that corresponds to the second terminal; the session management network element sends an identifier of the second terminal to the user plane network element; the user plane network element allocates an identifier of the user plane network element to the second terminal; the user plane network element sends the identifier of the user plane network element to the session management network element; and the session management network element sends the identifier of the user plane network element. The second terminal has a non-3GPP access capability, and the identifier of the user plane network element is identification information of the user plane network element connected to the second terminal through a non-3rd generation partnership project 3GPP access side.

In a possible design solution, the information about the second terminal includes the identifier of the second terminal and service information of the second terminal.

Optionally, the service information of the second terminal is service information that is of the second terminal and that is related to a personal identification number PIN.

Optionally, the service information of the second terminal includes at least one of an identifier of a PIN, a data network name DNN, information about a slice, a security vector of the second terminal, and location information of the second terminal.

Optionally, the information about the second terminal further includes user plane identifier request indication information, the user plane identifier request indication information is used to request a network to allocate the user plane network element identifier, and the user plane network element identifier is the identification information of the user plane network element connected to the terminal through the non-3GPP access side.

In a possible design solution, that the session management network element obtains the information about the second terminal includes: The session management network element receives information about a service from a first terminal, and obtains, based on the information about the service, the information about the second terminal from a network element serving the first terminal. The information about the service is information about a service related to the second terminal.

Optionally, that the session management network element sends the identifier of the user plane network element includes: The session management network element sends the identifier of the second terminal and the identifier of the user plane network element to the network element serving the first terminal.

In a possible design solution, that the session management network element sends the identifier of the second terminal to the user plane network element includes: The session management network element sends a PFCP session establishment request message to the user plane network element, where the identifier that is of the second terminal and that is carried in the PFCP session establishment request message is used to request to allocate, to the second terminal, the identification information that identifies the user plane network element connected to the second terminal through the non-3GPP access side.

Optionally, the PFCP session establishment request message further carries the security vector of the second terminal, and the security vector is information used when the second terminal establishes a secure connection of a user plane through the non-3GPP access side connection.

Optionally, that the user plane network element sends the identifier of the user plane network element to the session management network element includes: The user plane network element sends an FCP session response message to the session management network element, where the PFCP session establishment response message carries the identifier of the user plane network element.

In a possible design solution, the method further includes: The user plane network element establishes a secure connection to the second terminal that is over non-3GPP access.

Optionally, that the user plane network element establishes the secure connection to the second terminal that is over non-3GPP access includes: The user plane network element receives a secure connection establishment request sent by the second terminal over non-3GPP access; and in response to the request of the second terminal, the user plane network element establishes the secure connection to the second terminal by using the security vector of the second terminal.

In a possible design solution, the identifier of the user plane network element is an IP address of the user plane network element.

In a possible design solution, the identifier of the second terminal is used to select a network element of the user plane for the second terminal.

It may be understood that, for a related technical effect of the method according to the thirteenth aspect, refer to related descriptions of the another aspect. Details are not described herein again.

According to a fourteenth aspect, a communication method is provided and applied to a network. The method includes: The network obtains information about a second terminal; obtains, based on the information about the second terminal, an identifier of a user plane network element that supports non-3GPP access and that corresponds to the second terminal; and sends the identifier of the user plane network element. The second terminal has a non-3GPP access capability, and the identifier of the user plane network element is identification information of the user plane network element connected to the second terminal through a non-3rd generation partnership project 3GPP access side.

In a possible design solution, the information about the second terminal includes an identifier of the second terminal and service information of the second terminal.

Optionally, the service information of the second terminal is service information that is of the second terminal and that is related to a personal identification number PIN.

Optionally, the service information of the second terminal includes at least one of an identifier of a PIN, a data network name DNN, information about a slice, a security vector of the second terminal, and location information of the second terminal.

Optionally, the information about the second terminal further includes user plane identifier request indication information, the user plane identifier request indication information is used to request a network to allocate the user plane network element identifier, and the user plane network element identifier is the identification information of the user plane network element connected to the terminal through the non-3GPP access side.

In a possible design solution, that the network obtains the information about the second terminal includes: The network obtains the information about the second terminal from an application function corresponding to the second terminal.

Optionally, that the network sends the identifier of the user plane network element includes: The network sends the identifier of the user plane network element to the application function.

In a possible design solution, the method further includes: The network receives information about a service from the first terminal, where the information about the service is information about a service related to the second terminal. Correspondingly, that the network obtains, based on the information about the second terminal, the identifier of the user plane network element that is in the network and that corresponds to the second terminal includes: The network obtains the identifier of the user plane network element based on the information about the second terminal in response to the information about the service.

In a possible design solution, the identifier of the user plane network element is an IP address of the user plane network element.

In a possible design solution, the identifier of the second terminal is used to select a network element of a user plane for the second terminal.

It may be understood that, for a related technical effect of the method according to the fourteenth aspect, refer to related descriptions of the another aspect. Details are not described herein again.

According to a fifteenth aspect, a communication apparatus is provided. The communication apparatus includes a module configured to perform the method according to any one of the first aspect to the fourteenth aspect, for example, a transceiver module and a processing module. For example, the transceiver module is configured to indicate sending and receiving functions of the communication apparatus, and the processing module is configured to perform a function of the communication apparatus other than the sending and receiving functions.

Optionally, the transceiver module may include a sending module and a receiving module. The sending module is configured to implement a sending function of the communication apparatus according to the fifteenth aspect, and the receiving module is configured to implement a receiving function of the communication apparatus according to the fifteenth aspect.

Optionally, the communication apparatus according to the fifteenth aspect may further include a storage module. The storage module stores a program or instructions. When the processing module executes the program or the instruction, the communication apparatus is enabled to perform the method according to any one of the first aspect to the fourteenth aspect.

It should be noted that the communication apparatus according to the fifteenth aspect may be a terminal or a network device, may be a chip (system) or another part or component that may be disposed in a terminal or a network device, or may be an apparatus that includes a terminal or a network device. This is not limited in this application.

In addition, for a technical effect of the communication apparatus according to the fifteenth aspect, refer to the technical effects of the another aspect. Details are not described herein again.

According to a sixteenth aspect, a communication apparatus is provided. The communication apparatus includes a processor, and the processor is configured to perform the method according to any one of the first aspect to the fourteenth aspect.

In a possible design solution, the communication apparatus according to the sixteenth aspect may further include a transceiver. The transceiver may be a transceiver circuit or an interface circuit. The transceiver may be used by the communication apparatus according to the sixteenth aspect to communicate with another communication apparatus.

In a possible design solution, the communication apparatus according to the sixteenth aspect may further include a memory. The memory and the processor may be integrated together, or may be disposed separately. The memory may be configured to store a computer program and/or data related to the method according to any one of the first aspect to the fourteenth aspect.

In embodiments of this application, the communication apparatus according to the sixteenth aspect may be the terminal or the network device according to any one of the first aspect to the fourteenth aspect, a chip (system) or another part or component that may be disposed in the terminal or the network device, or an apparatus that includes the terminal or the network device.

In addition, for technical effects of the communication apparatus according to the sixteenth aspect, refer to the technical effects of the method according to any one of the first aspect to the fourteenth aspect. Details are not described herein again.

According to a seventeenth aspect, a communication apparatus is provided. The communication apparatus includes a processor. The processor is coupled to a memory. The processor is configured to execute a computer program stored in the memory, so that the communication apparatus performs the method according to any one of the first aspect to the fourteenth aspect.

In a possible design solution, the communication apparatus according to the seventeenth aspect may further include a transceiver. The transceiver may be a transceiver circuit or an interface circuit. The transceiver may be used by the communication apparatus according to the seventeenth aspect to communicate with another communication apparatus.

In embodiments of this application, the communication apparatus according to the seventeenth aspect may be the terminal or the network device according to any one of the first aspect to the fourteenth aspect, a chip (system) or another part or component that may be disposed in the terminal or the network device, or an apparatus that includes the terminal or the network device.

In addition, for technical effects of the communication apparatus according to the seventeenth aspect, refer to the technical effects of the method according to any one of the first aspect to the fourteenth aspect. Details are not described herein again.

According to an eighteenth aspect, a communication apparatus is provided. The apparatus includes a processor and a memory. The memory is configured to store a computer program. When the processor executes the computer program, the communication apparatus is enabled to perform the method according to any one of the first aspect to the fourteenth aspect.

In a possible design solution, the communication apparatus according to the eighteenth aspect may further include a transceiver. The transceiver may be a transceiver circuit or an interface circuit. The transceiver may be used by the communication apparatus according to the eighteenth aspect to communicate with another communication apparatus.

In embodiments of this application, the communication apparatus according to the eighteenth aspect may be the terminal or the network device according to any one of the first aspect to the fourteenth aspect, a chip (system) or another part or component that may be disposed in the terminal or the network device, or an apparatus that includes the terminal or the network device.

In addition, for technical effects of the communication apparatus according to the eighteenth aspect, refer to the technical effects of the method according to any one of the first aspect to the fourteenth aspect. Details are not described herein again.

According to a nineteenth aspect, a communication system is provided. The communication system includes the device/network element in the method according to at least two of the first aspect to the fifth aspect. Alternatively, the communication system includes the device/network element in the method according to at least two of the eighth aspect to the twelfth aspect.

According to a twentieth aspect, a computer-readable storage medium is provided. The computer-readable storage medium includes a computer program or instructions. When the computer program or the instructions are run on a computer, the computer is enabled to perform the method according to any one of the first aspect to the fourteenth aspect.

According to a twenty-first aspect, a computer program product is provided. The computer program product includes a computer program or instructions. When the computer program or the instructions are run on a computer, the computer is enabled to perform the method according to any one of the first aspect to the fourteenth aspect.

### BRIEF DESCRIPTION OF DRAWINGS

FIG. 1 is a diagram of an architecture of a 5GS;
FIG. 2 is a diagram of an architecture of non-3GPP access and 3GPP access;
FIG. 3 is a diagram of an architecture of a multi-access PDU session;
FIG. 4 is a diagram of an architecture of a communication system according to an embodiment of this application;
FIG. 5A, FIG. 5B, and FIG. 5C are a first schematic flowchart of a communication method according to an embodiment of this application;
FIG. 6A and FIG. 6B are a second schematic flowchart of a communication method according to an embodiment of this application;
FIG. 7 is a third schematic flowchart of a communication method according to an embodiment of this application;
FIG. 8 is a fourth schematic flowchart of a communication method according to an embodiment of this application;
FIG. 9 is a fifth schematic flowchart of a communication method according to an embodiment of this application;
FIG. 10 is a sixth schematic flowchart of a communication method according to an embodiment of this application;
FIG. 11 is a seventh schematic flowchart of a communication method according to an embodiment of this application;
FIG. 12 is a first diagram of a structure of a communication apparatus according to an embodiment of this application; and
FIG. 13 is a second diagram of a structure of a communication apparatus according to an embodiment of this application.

### DESCRIPTION OF EMBODIMENTS

For ease of understanding, the following first describes technical terms in embodiments of this application.

### 1. 5G mobile communication system (5G system (5G system, 5GS) for short)

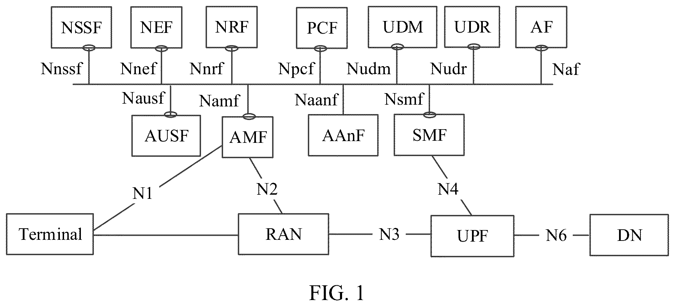

FIG. 1 is a first diagram of an architecture of a 5GS. As shown in FIG. 1, the 5GS includes an access network (access network, AN) and a CN, and may further include a terminal.

There may be one or more terminals, such as a first terminal, a second terminal, and a third terminal. The terminal may be a terminal having sending and receiving functions, or may be a chip or a chip system disposed in the terminal. The terminal may also be referred to as UE, an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer with wireless sending and receiving functions, a virtual reality (virtual reality, VR) terminal, an augmented reality (augmented reality, AR) terminal, a smart home device (for example, a refrigerator, a television, an air conditioner, and an electric meter), a smart robot, a robot arm, a workshop device, a wireless terminal in industrial control (industrial control), a wireless terminal in self driving (self driving), a wireless terminal in telemedicine (telemedicine), a wireless terminal a in smart grid (smart grid), a wireless terminal in transportation security (transportation safety), a wireless terminal in a smart city (smart city), a wireless terminal in a smart home (smart home), a vehicle-mounted terminal, a road side unit (road side unit, RSU) or the like having a terminal function, a flight device (for example, an intelligent robot, a hot air balloon, an unmanned aerial vehicle, or an airplane), or the like. Alternatively, the terminal in this application may be a vehicle-mounted module, a vehicle-mounted assembly, a vehicle-mounted component, a vehicle-mounted chip, or a vehicle-mounted unit that is built in a vehicle as one or more parts or units. The terminal device may alternatively be another device having a terminal function. For example, the terminal device may alternatively be a device functioning as a terminal in D2D communication.

A device form of the terminal is not limited in embodiments of this application. An apparatus configured to implement a function of the terminal device may be a terminal device; or may be an apparatus that can support a terminal device in implementing the function, for example, a chip system. The apparatus may be mounted in a terminal device or used together with a terminal device. In embodiments of this application, the chip system may include a chip, or may include a chip and another discrete component.

The foregoing AN is configured to implement an access-related function, may provide a network access function for an authorized user in a specific area, and can determine transmission links with different quality based on a user level, a service requirement, and the like, to perform transmission of user data. The AN forwards a control signal and user data between the terminal and the CN. The AN may include an access network device, or may be referred to as a radio access network (radio access network, RAN) device. The CN is mainly responsible for maintaining subscription data of a mobile network, and provides functions such as session management, mobility management, policy management, and security authentication for the terminal. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), and an application function (application function, AF).

There may be one or more RAN devices, namely, access network apparatuses. The access network apparatus may be a device having wireless sending and receiving functions, or may be a chip or a chip system disposed in the device, and is located in the access network (access network, AN) of the communication system, to provide an access service for the terminal. For example, the access network apparatus may be referred to as a radio access network device (radio access network, RAN) device, and may be specifically an access network device in a next-generation mobile communication system such as 6G, for example, a 6G base station. Alternatively, in a next-generation mobile communication system, the access network apparatus may be named in another manner, which falls within the protection scope of embodiments of this application. This is not limited in this application. Alternatively, the access network apparatus may include a gNB in 5G, for example, a new radio (new radio, NR) system, one antenna panel or a group of antenna panels (including a plurality of antenna panels) of a base station in 5G; or may be a network node that forms a gNB, a transmission and reception point (transmission and reception point, TRP; or transmission point, TP), or a transmission measurement function (transmission measurement function, TMF), for example, a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, a 5G core network element, or the like. Alternatively, the access network apparatus may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The UPF network element is mainly responsible for user data processing (forwarding, receiving, charging, and the like). For example, the UPF network element may receive user data from a data network (data network, DN), and forward the user data to the terminal through the access network device. The UPF network element may also receive user data from the terminal through the access network device, and forward the user data to the DN. The DN network element is an operator network that provides a data transmission service for a user, for example, an internet protocol (internet protocol, IP) multi-media service (IP multi-media service, IMS) or an internet (internet). The DN may be an external network of an operator, or may be a network controlled by an operator, and is configured to provide a service for the terminal device.

The AUSF network element is mainly configured to perform security authentication on the terminal.

The AMF network element is mainly for mobility management in the mobile network, for example, user location update, registration of a user to a network, and user handover.

The SMF network element is mainly for session management in the mobile network, for example, session establishment, modification, and release. A specific function is, for example, allocating an internet protocol (internet protocol, IP) address to a user, or selecting a UPF network element that provides a packet forwarding function.

The PCF network element mainly supports providing a unified policy framework to govern network behavior, and provides policy rules for a control layer network function, and is responsible for accessing user subscription information relevant for policy decisions. The PCF network element may provide a policy such as a quality of service (quality of service, QoS) policy or a slice selection policy for the AMF network element and the SMF network element.

The NSSF network element is mainly configured to select a network slice for the terminal.

The NEF network element is mainly configured to support exposure of capabilities and events.

The UDM network element is mainly configured to store user data, for example, subscription data and authentication/authorization data.

The UDR network element is mainly configured to store structured data. Stored content includes subscription data, policy data, structured data for exposure, and application-related data.

The AF mainly supports interacting with the CN to provide services, for example, influence on data routing decisions, a policy control function, or providing some third-party services for a network side. Optionally, the AF may provide a personal identification number (personal identification number, PIN) service, which may also be referred to as a PIN-AF.

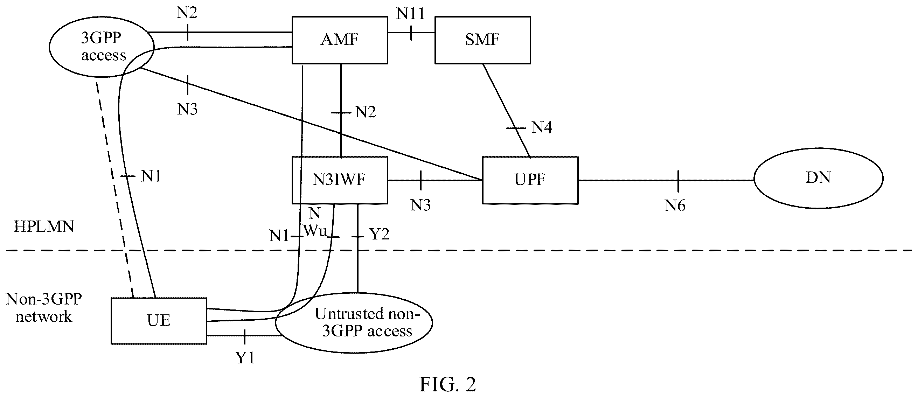

When a 5GC (5G core network) supports untrusted non-3GPP (N3G for short) access, the architecture of the 5GS is shown in FIG. 2. An N3IWF is also referred to as an untrusted non-3GPP access gateway, for example, may be an untrusted WLAN access gateway, to support an untrusted WLAN access technology.

In addition, the 5GC may also support trusted non-3GPP access and/or wired network access. A trusted non-3GPP network includes a trusted WLAN network, and a wired network includes fixed home network access and the like. A network side architecture is similar to an untrusted non-3GPP access architecture. For example, the N3IWF may be replaced with a trusted WLAN access gateway (trusted non-3GPP gateway function, TNGF), or a wired network access gateway (wireline access gateway function, W-AGF). An access network device between the UE and the access gateway (for example, the TNGF or the W-AGF) includes a WLAN AP, a wired network access network device (fixed access network, FAN), a switch, a router, and the like.

In conclusion, an N3G access technology includes a WLAN access technology and a wired access technology. The WLAN access technology corresponds to a WLAN AP deployed in a campus or a WLAN AP hotspot deployed in a public place, and the wired access technology corresponds to wired access deployed in a home network. In addition, the WLAN access technology can be further classified into a trusted WLAN and an untrusted WLAN. In conclusion, the non-3GPP access technology includes access technologies such as trusted non-3GPP access, untrusted non-3GPP access, trusted WLAN access, untrusted WLAN access, and wired access, which is also referred to as fixed network access. Regardless of whether the access is trusted non-3GPP access or untrusted non-3GPP access, the core network side may support the point-to-point interface protocol shown in FIG. 2, or support the service-based interface consistently used in the core network architecture of 3GPP access shown in FIG. 1.

### 2. Protocol data unit (protocol data unit, PDU) session

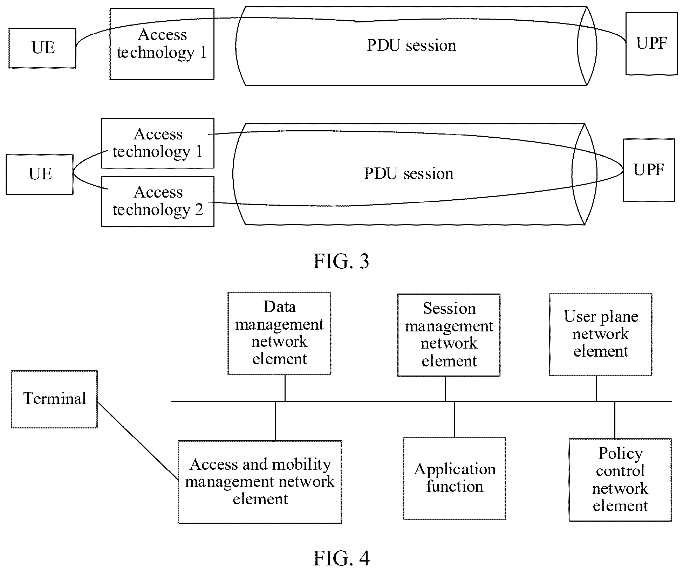

Currently, 3GPP supports establishment of a single-access PDU session or a multi-access (multi-access, MA) PDU session. As shown in FIG. 3, a single-access PDU session means that this PDU session supports only one access technology, for example, 3GPP access or non-3GPP access; in other words, the PDU can transfer only data of a UE that accesses a network by using this access technology. The multi-access PDU session means that this PDU session may support a plurality of access technologies. For example, a PDU session A can transfer data of a UE that accesses a network by using a first access technology, and can also transfer data of a UE that accesses the network by using a second access technology. The first/second access technology is not limited in embodiments of this application, and may be the foregoing 3GPP access, non-3GPP access (trusted non-3GPP access or untrusted non-3GPP access), LTE access, 5G RAN access, WLAN access, fixed network access, or the like.

It can be learned that, a prerequisite for implementing the single-access PDU session or the multi-access PDU session is that the UE needs to support access on an N3G side. In an N3G scenario, a UE needs to support access to a 5GC through an N3G side. In this case, an N3G access gateway needs to be deployed in a network, and the UE also needs to support transmission of a NAS message on an N3G access side. As a result, network deployment costs (for example, N3IWF deployment) and UE implementation costs (supporting NAS transport over N3G access) are increased, and commercial use of a non-3GPP access to 5GC feature on a live network is affected.

For the foregoing technical problem, embodiments of this application provide the following technical solutions.

The following describes technical solutions of this application with reference to the accompanying drawings.

The technical solutions in embodiments of this application may be applied to various communication systems such as a wireless fidelity (Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, a 5G mobile communication system, for example, an NR system, and a future communication system.

In embodiments of this application, "indication" may include a direct indication and an indirect indication, or may include an explicit indication and an implicit indication. Information indicated by a piece of information (for example, the following first indication information, second indication information, or third indication information) is referred to as to-be-indicated information. In a specific implementation process, the to-be-indicated information is indicated in a plurality of manners. By way of example and not limitation, the to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using a pre-agreed (for example, protocol-stipulated) arrangement sequence of a plurality of pieces of information, to reduce indication overheads to some extent. In addition, a common part of all the pieces of information may further be identified and indicated in a unified manner, to reduce indication overheads caused by separately indicating same information.

Furthermore, specific indication manners may alternatively be various existing indication manners, for example, but not limited to, the foregoing indication manners and various combinations thereof. For specific details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In addition, the to-be-indicated information may be sent as a whole, or may be divided into a plurality of pieces of sub-information for sending separately; and sending periodicities and/or sending occasions of these pieces of sub-information may be the same or different. A specific sending method is not limited in embodiments of this application. The sending periodicities and/or the sending occasions of these pieces of sub-information may be predefined, for example, predefined according to a protocol, or may be configured by a transmit-end device by sending configuration information to a receive-end device.

"Predefinition" or "pre-configuration" may be implemented by pre-storing corresponding code or a corresponding table in a device or in another manner that can indicate related information. A specific implementation thereof is not limited in embodiments of this application. "Storing" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to that of the protocol family, or a related protocol applied to a future communication system. This is not specifically limited in embodiments of this application.

In embodiments of this application, the descriptions "when...", "in a case in which...", "if", "assuming", and the like all mean that a device performs corresponding processing in an objective case, but are not intended to limit time. The descriptions do not necessarily mean that the device performs a determining action during implementation, and do not mean any other limitation.

In the descriptions of embodiments of this application, "/" represents an "or" relationship between associated objects unless otherwise specified. For example, A/B may represent A or B. In embodiments of this application, "and/or" describes only an association relationship between associated objects, and represents that three relationships may exist. For example, A and/or B may represent the following three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a singular item (piece) or any combination of a plurality of items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to a similar technical problem.

For ease of understanding of embodiments of this application, a communication system shown in FIG. 4 is first used as an example to describe in detail a communication system usable in embodiments of this application. For example, FIG. 4 is a diagram of an architecture of a communication system to which a communication method is applicable to according to an embodiment of this application.

As shown in FIG. 4, the communication system may be applicable to the foregoing 5GS, and mainly includes a terminal, a user plane network element, an access and mobility management network element, a session management network element, a data management network element, a policy control network element, and an application function.

The terminal may be a terminal supporting non-3GPP access. For ease of understanding, the terminal supporting non-3GPP access is defined as an x device (xDevice), or may be replaced with another possible representation manner. This is not limited. An identifier of the x device, in other words, an x device identifier (xDevice ID) may be used to select a network element of a user plane (for example, a UPF network element) for the x device, and may be specifically a user equipment identifier used by the x device during non-3GPP access; or may identify a device supporting (or using) non-3GPP access, for example, may be a subscription permanent identifier (subscription permanent identifier, SUPI), a subscription concealed identifier (subscription concealed identifier, SUCI), or a 5G temporary identifier (5G-globally unique temporary UE identifier, 5G-GUTI), or may be a user equipment identifier in a format of a network access identifier (network access identifier, NAI). The NAI may be based on an existing defined format, for example, a user equipment identifier or a domain name (domain name). The user equipment identifier may alternatively be the foregoing SUPI, SUCI, 5G-GUTI, or another type of user equipment identifier. This is not limited.

It may be understood that, if the x device supports both non-3GPP access and 3GPP access, the x device may be understood as a terminal in a conventional sense (namely, a terminal supporting 3GPP access), in other words, the x device and the terminal are a same device, and the x device identifier is a terminal identifier, for example, a UE ID. If the x device supports only non-3GPP access, the x device usually cannot be understood as a terminal in a conventional sense, in other words, the x device and the terminal are different devices, and the x device identifier and a terminal identifier may also be different identifiers.

In addition, for a device form of the terminal, refer to related descriptions in the foregoing 5GS. Details are not described herein again.

The user plane network element may be the UPF network element in the 5GS. For details, refer to the foregoing related descriptions, or a network element configured to implement a corresponding function of a user plane in a future communication system. This is not limited.

The access and mobility management network element may be the AMF network element in the 5GS. For details, refer to the foregoing related descriptions, or a network element configured to implement a corresponding function of access and mobility management in a future communication system. This is not limited.

The session management network element may be the SMF network element in the 5GS. For details, refer to the foregoing related descriptions, or a network element configured to implement a corresponding function of session management in a future communication system. This is not limited.

The data management network element may be the UDM network element in the 5GS. For details, refer to the foregoing related descriptions, or a network element configured to implement a corresponding function of data management in a future communication system. This is not limited.

The policy control network element may be the PCF network element in the 5GS. For details, refer to the foregoing related descriptions, or a network element configured to implement a corresponding function of policy control in a future communication system. This is not limited.

The application function may be the AF in the 5GS. For details, refer to the foregoing related descriptions, or a network element configured to implement a corresponding function of an application in a future communication system. This is not limited.

In the communication system, the terminal may reuse 3GPP access to obtain an identifier of the user plane network element from a network, or the application function may actively obtain the identifier of the user plane network element from the network (for example, the session management network element in the network), and provide the identifier for the terminal. In this way, the terminal may directly communicate with the user plane network element through a non-3GPP access side connection, in other words, directly establish a user plane connection by bypassing an N3G access gateway. In this way, the N3G access gateway may not be deployed in the network, and the UE may also not support transmission of a NAS message over N3G access, so that a user plane connection over non-3GPP access can be established at reduced costs.

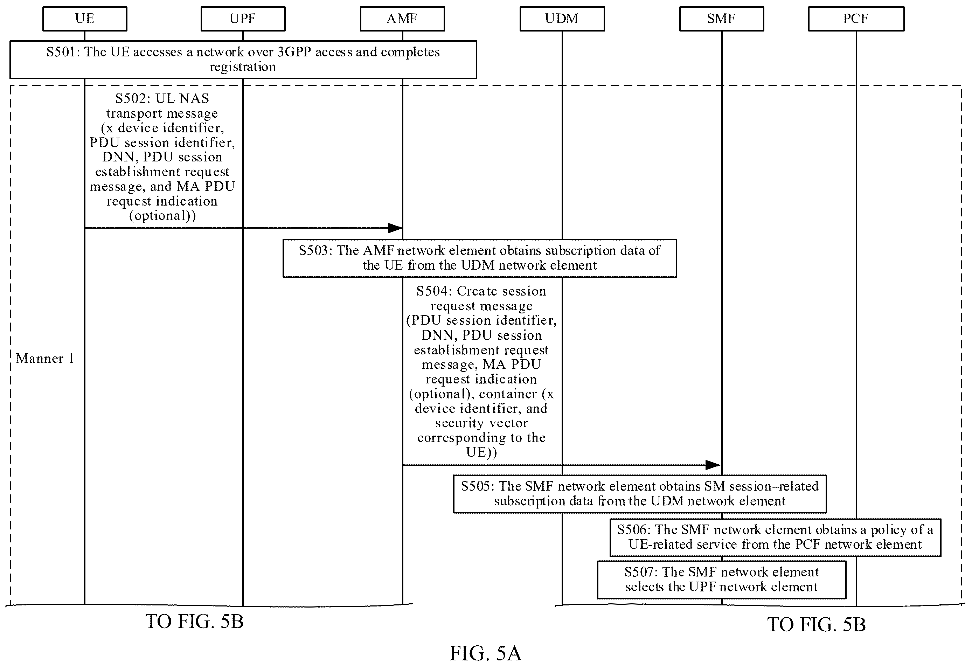

With reference to FIG. 5A to FIG. 11, the following specifically describes interaction procedures between the network elements/devices in the foregoing communication system by using method embodiments. The communication method provided in embodiments of this application may be applicable to the foregoing communication system, and is specifically applied to various scenarios mentioned in the foregoing communication system. The following provides specific descriptions.

### Scenario 1:

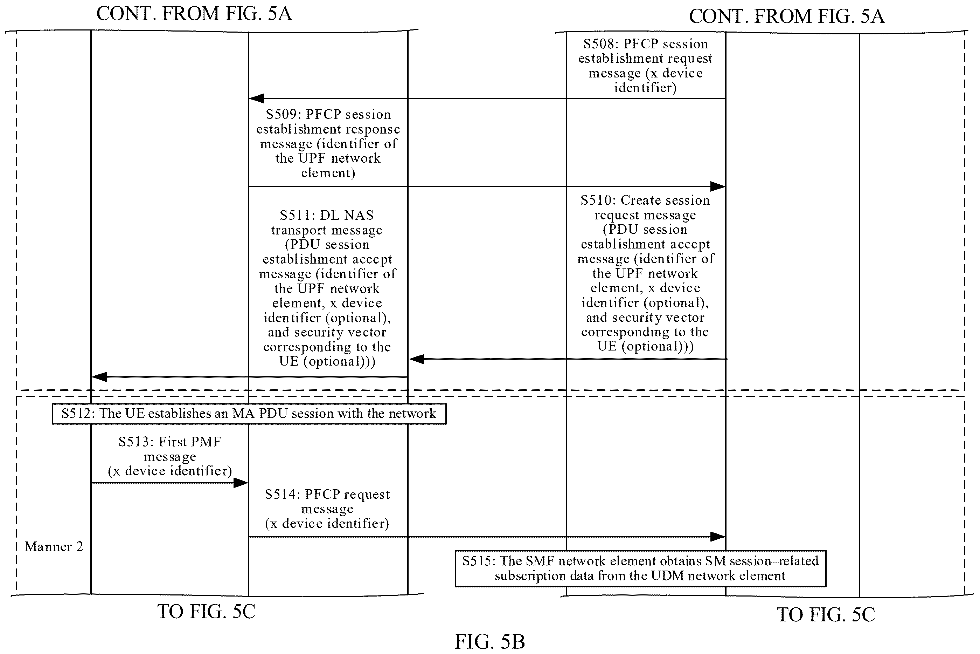

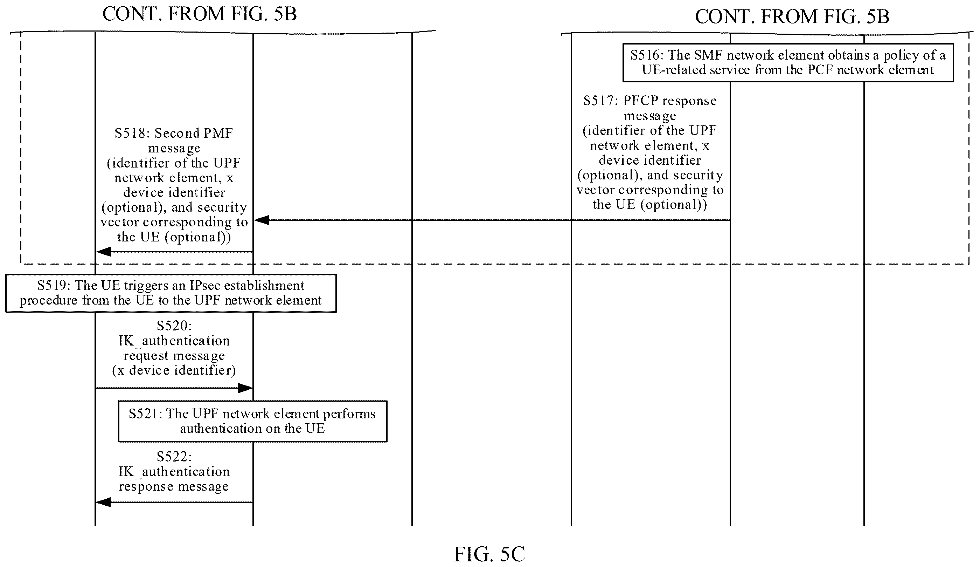

FIG. 5A, FIG. 5B, and FIG. 5C are a first schematic flowchart of a communication method according to an embodiment of this application. The communication method is applicable to the foregoing communication system, and mainly relates to interaction between a UE, a UPF network element, an AMF network element, an SMF network element, and the like.

In the scenario 1, a UE may be used as an x device, in other words, the UE and the x device are a same device. After accessing a 5GC over 3GPP access, the UE may obtain an identifier of a UPF network element from the 5GC, for example, an IP address of the UPF network element. In this way, when the UE accesses the 5GC over non-3GPP access, the UE does not need to perform NAS interaction, and may establish a user plane connection to the UPF network element by directly using the IP address of the UPF network element. In this way, network deployment costs can be reduced, in other words, an access gateway for non-3GPP access does not need to be deployed on a network side, and implementation costs of the UE can further be reduced, in other words, the UE does not need to support NAS transport over N3G access, to facilitate commercial use of a non-3GPP access to 5GC feature on a live network.

As shown in FIG. 5A, FIG. 5B, and FIG. 5C, a procedure of the communication method is as follows.

S501: A UE accesses a network over 3GPP access and completes registration.

For an implementation of S501, an existing access procedure and an existing registration procedure may be reused. For details, refer to descriptions in a related 3GPP section. Details are not described herein.

When the UE completes the registration, in a manner (1), the UE may obtain an identifier of a UPF network element from the network in a process of establishing a session, for example, the following S502 to S511. Alternatively, in a manner (2), after establishing a session, the UE may obtain an identifier of a UPF network element from the UPF network element by reusing a user plane connection of the session, for example, the following S512 to S518. The following separately provides descriptions.

### Manner 1:

S502: The UE sends an uplink (uplink, UL) NAS transport (UL NAS transport) message to an AMF network element. The AMF network element receives the UL NAS transport message from the UE.

The UL NAS transport message may be understood as a common NAS message, or a first NAS message. Information carried in the UL NAS transport message is mainly used by the UE to request to establish a PDU session, or is used to trigger a PDU session establishment procedure. The UL NAS transport message includes at least one of the following: an x device identifier (namely, an identifier of the UE), a PDU session identifier (PDU session ID), a data network name (data network name, DNN) of the UE, or a PDU session establishment request (PDU session establishment request) message. Optionally, the UL NAS transport message may further include an MA PDU request (MA PDU request) indication.

The MA PDU request indication may be used to request to establish a multi-access PDU session, or indicate that the PDU session that is requested to be established needs to be a PDU session supporting multi-access. Alternatively, the UL NAS transport message may not carry the MA PDU request indication, and establishment of a multi-access PDU session is requested by default. It may be understood that because the UE (x device) is a device that supports both 3GPP access and non-3GPP access, the x device identifier may further implicitly indicate that the UPF identifier needs to be allocated to the UE. The UPF identifier is identification information of the UPF network element connected to the UE through a non-3GPP access side. In addition, for the x device identifier, refer to related descriptions of FIG. 3. For the PDU session identifier, the DNN of the UE, the PDU session establishment request, and the like, refer to descriptions in a related 3GPP section. Details are not described herein.

It can be learned that if the UE wants to trigger establishment of the network to establish the PDU session for the UE, the UE may encapsulate the foregoing information into the UL NAS transport message, and then send the UL NAS transport message to the AMF network element, to trigger the PDU session establishment procedure.

It may be understood that, because the UE and the x device in the scenario 1 are the same device, the UE and the x device mentioned in the scenario 1 may be interchanged for understanding.

S503: The AMF network element obtains subscription data of the UE from a UDM network element.

The subscription data of the UE may include a security vector corresponding to the UE (for example, a security certificate, a public key, or a private key of the UE), an identifier of an SMF network element corresponding to the UE, or may further include other information. This is not limited in embodiments of this application. The AMF network element may obtain the x device identifier from the UL NAS transport message, and send the x device identifier to the UDM network element. Correspondingly, the UDM network element may provide the subscription data of the UE for the AMF network element based on the x device identifier.

S504: The AMF network element sends a create session request (create session request) message to the SMF network element. The SMF network element receives the create session request message from the AMF network element.

The SMF network element may be determined by the AMF network element based on the subscription data of the x device. For example, if the subscription data of the x device includes the identifier of the SMF network element, the AMF network element selects the SMF network element, and sends the create session request message to the SMF network element. The create session request message may be used to request the SMF network element to create the PDU session for the UE. The create session request message may include at least one of the following: the DNN of the UE, the PDU session identifier, the PDU session establishment request message, the MA PDU request indication (optional), or a container. The container may include the x device identifier and the security vector that corresponds to the UE. In other words, the AMF network element may encapsulate the information in the subscription data of the UE and the information in the UL NAS transport into the create session request message, and then send the create session request message to the SMF network element.

S505: The SMF network element obtains session management (session Management, SM) session-related subscription data from the UDM network element.

The SMF network element may obtain, from the UDM network element based on the x device identifier, SM session-related subscription data related to the x device identifier, for example, a service identifier (a DNN of a service) and a service QoS parameter. For example, the SMF network element may send the x device identifier to the UDM network element, and the UDM network element may return, to the SMF network element based on the x device identifier, the SM session-related subscription data related to the x device identifier.

S506: The SMF network element obtains a policy of a UE-related service from a PCF network element.

The policy of the UE-related service may include a QoS policy, a charging policy, and the like, for use of a service implemented over non-3GPP access. For example, the SMF network element may send the x device identifier and the SM session-related subscription data to the PCF network element, so that the PCF network element generates the policy of the UE-related service based on the x device identifier and the SM session-related subscription data, and returns the policy of the UE-related service to the SMF network element.

S507: The SMF network element selects the UPF network element.

The SMF network element may select the UPF network element based on the DNN of the UE, to initiate the following packet forwarding control protocol (packet forwarding control protocol, PFCP) session establishment procedure.

S508: The SMF network element sends a PFCP session establishment request (PFCP session establishment request) message to the UPF network element. The UPF network element receives the PFCP session establishment request message from the SMF network element.

The PFCP session establishment request message may be used to request to establish a connection between the SMF network element and the UPF network element. The PFCP session establishment request message may include the x device identifier. For example, the x device identifier may be carried in the PFCP session establishment request message in a container encapsulation manner. The x device identifier carried in the PFCP session establishment request message may be used to request to allocate, to the UE, the identification information that identifies the UPF network element connected to the UE through the non-3GPP access side.

It may be understood that an existing PFCP session establishment request message usually also carries the identifier of the UE. However, a difference from the conventional technology lies in that, although the identifier of the UE is reused in this embodiment of this application, a capability of the identifier of the UE may be enhanced. For example, the identifier of the UE may implicitly indicate that the terminal supports non-3GPP access, so that the UPF network element may allocate the identifier of the UPF network element to the terminal based on a case in which the terminal supports non-3GPP access (for details, refer to the following S509), in other words, an existing information element is reused for implementation. Therefore, overheads can be reduced. Certainly, a newly defined information element may alternatively be used for implementation, to implement decoupling from the existing information element, and transfer is more flexible.

Optionally, the PFCP session establishment request message may further include the security vector corresponding to the UE. For example, the security vector corresponding to the UE and the x device identifier may be encapsulated in a same container. Certainly, the PFCP session establishment request message may alternatively not carry the security vector corresponding to the UE. In this case, the security vector corresponding to the UE may be derived by the UPF network element, or may be pre-configured or protocol-predefined locally in the UPF network element.

S509: The UPF network element sends a PFCP session establishment response (PFCP session establishment response) message to the SMF network element. The SMF network element receives the PFCP session establishment response message from the UPF network element.

The PFCP session establishment response message may be used to respond to the PFCP session establishment request message, to indicate that a PFCP session is successfully established or fails to be established. The PFCP session establishment response message may include the identifier of the UPF network element.

The identifier of the UPF network element is the identification information of the UPF network element connected to the UE through the non-3GPP access side, for example, the IP address of the UPF network element. For example, the IP address may also be referred to as an xUPF IP, and may be specifically a public IP, to establish an IP connection between the UPF and the x device that accesses the network over non-3GPP access. Certainly, the IP address of the UPF network element is not limited to being implemented by the IP address, and may alternatively be, for example, a fully qualified domain name (fully qualified domain name, FQDN). The IP address of the UPF network element may be an address allocated by the UPF network element to the x device (namely, the UE) based on the x device identifier. In other words, the UPF network element may learn, based on the x device identifier, that the UPF network element needs to allocate, to the x device, the identifier of the UPF network element, namely, the IP address of the UPF network element, and return the IP address of the UPF network element to the SMF network element by reusing the PFCP session establishment request message.

In addition, the UPF network element may also store the x device identifier. If receiving the security vector corresponding to the UE, the UPF network element also stores the security vector corresponding to the x device. The x device identifier and the security vector corresponding to the UE may also be considered as a UE context.

S510: The SMF network element sends a create session response (create session response) message to the AMF network element. The AMF network element receives the create session response message from the SMF network element.

The create session response message may be used to respond to the create session request message. The create session response message may further carry a PDU session establishment accept (PDU session establishment accept) message, and the PDU session establishment accept message may be used to respond to the PDU session establishment request message.

The PDU session establishment accept message may include the identifier of the UPF network element, and optionally, may further include the x device identifier, to indicate that the identifier of the UPF network element is the UPF network element identifier allocated to the x device. Certainly, if the PDU session establishment accept message does not include the x device identifier, it is considered by default that the identifier of the UPF network element is the UPF network element identifier allocated to the x device.

Optionally, the PDU session establishment accept message may further include the security vector corresponding to the UE. In this way, the UE does not need to derive the security vector corresponding to the UE, to reduce overheads of the UE. Certainly, if the PDU session establishment accept message does not include the security vector corresponding to the UE, the security vector corresponding to the UE may be derived by the UE, or may be pre-configured or protocol-predefined locally in the UE.

S511: The AMF network element sends a downlink (downlink, DL) NAS transport message to the UE. The UE receives the DL NAS transport message from the AMF network element.

The DL NAS transport message may be used to respond to the UL NAS transport message, or may be referred to as a NAS message, for example, a second NAS message, and may include the PDU session establishment accept message. The DL NAS transport message includes the identifier of the UPF network element, and optionally, further includes the security vector corresponding to the UE. In this way, the UE may obtain the identifier of the UPF network element, and optionally, may further obtain the security vector corresponding to the UE.

### Manner 2:

S512: The UE establishes an MA PDU session with the network.

For an implementation of S512, an existing MA PDU session establishment procedure may be reused. For details, refer to descriptions in a related 3GPP section. Details are not described herein.

S513: The UE sends a first performance measurement function (performance measurement function, PMF) message to the UPF network element. The UPF network element receives the first PMF message from the UE.

When the UE has successfully established the MA PDU session, the UPF network element is a user plane port of the MA PDU session. In other words, it may be considered that the UE has established a user plane tunnel to the UPF network element after 3GPP access. The first PMF message is carried on the user plane tunnel. Therefore, the first PMF message is a user plane message. Currently, the first PMF message may alternatively be replaced with any possible message of a user plane, in other words, a first message of the user plane. This is not limited. An x device identifier carried in the first PMF message may be used to request to allocate, to the UE, identification information that identifies the UPF network element connected to the UE through a non-3GPP access side.

It may be understood that, when receiving the first PMF message, the UPF network element may allocate the identifier of the UPF network element to the UE based on the x device identifier carried in the first PMF message. Alternatively, the UPF network element may trigger, in the following S517 based on a received security vector corresponding to the UE, allocation of the identifier of the UPF network element to the UE. For details, refer to the following related descriptions.

It may be further understood that the user plane tunnel between the UE and the UPF network element mentioned in S513 is a tunnel established in a segmental manner, in other words, a tunnel between the UE and a RAN device and a tunnel between the RAN device and the UPF network element are separately established. In this case, the RAN device is used as a relay device, and the UE is unaware of existence of the UPF network element. In other words, the UE cannot directly communicate with the UPF network element, in other words, cannot directly use the IP address of the UPF network element as a destination address to send data/signaling to the UPF network element.

S514: The UPF network element sends a PFCP request message to an SMF network element. The SMF network element receives the PFCP request message from the UPF network element.

Same as above, the SMF network element is an SMF network element corresponding to the MA PDU session. The PFCP request message carries the x device identifier.

S515: The SMF network element obtains SM session-related subscription data from a UDM network element.

A specific implementation of S515 is similar to that of S505. For understanding, refer to S505. A difference lies in that the SM session-related subscription data may further include the security vector corresponding to the x device.

S516: The SMF network element obtains a policy of a UE-related service from a PCF network element.

A specific implementation of S516 is similar to that of S506. For understanding, refer to S506. Details are not described herein again.

It may be understood that, for the PCF network element, the PCF network element learns, by using the x device identifier, that the UE is a device that supports non-3GPP access, and therefore triggers obtaining of non-3GPP access-related information of the UE, for example, the security vector corresponding to the UE, and a QoS policy and a charging policy that are used for a service implemented over non-3GPP access. For details, refer to the foregoing related descriptions. Details are not described herein again.

S517: The SMF network element sends a PFCP response message to the UPF network element. The UPF network element receives the PFCP response message from the SMF network element.

The PFCP response message may be used to respond to the PFCP request message. The PFCP response message may carry the x device identifier and the security vector, to jointly indicate that the security vector is the security vector corresponding to the UE. Certainly, if the PFCP response message does not include the security vector corresponding to the UE, the security vector corresponding to the UE may be derived by the UPF network element, or may be pre-configured or protocol-predefined locally in the UPF network element.

Similarly, the UPF network element may also store the x device identifier. If receiving the security vector corresponding to the UE, the UPF network element also stores the security vector corresponding to the UE. The x device identifier and the security vector corresponding to the UE may also be considered as a UE context.

S518: The UPF network element sends a second PMF message to the UE. The UPF network element receives the second PMF message from the UE.

Similarly, the second PMF message is also a user plane message. Currently, the second PMF message may alternatively be replaced with any possible message of a user plane, or a second message of the user plane. This is not limited. The second PMF message may carry the identifier of the UPF network element, and optionally, may further carry the security vector corresponding to the UE. Certainly, if the second PMF message does not include the security vector corresponding to the UE, the security vector corresponding to the UE may be derived by the UE, or may be pre-configured or protocol-predefined locally in the UE. In this way, the UE obtains the identifier of the UPF network element, and optionally, may further obtain the security vector corresponding to the UE.

It can be learned that the manner 1 and the manner 2 are parallel. After S511 or S518, when the UE accesses the network over non-3GPP access, the UE establishes a secure connection to the UPF network element based on the identifier of the UPF network element, in other words, directly establishes the user plane connection by bypassing the N3G access gateway, to establish a user plane connection over non-3GPP access at reduced costs. Details are shown in S519 to S522 below.

S519: The UE triggers an IP security association (IP security association, IPsec) establishment procedure from the UE to the UPF network element.

For example, N3G is a WLAN. The UE is in coverage of a WLAN AP, and establishes an L2 connection to the WLAN AP, in other words, accesses the network over non-3GPP (WLAN AP) access, or accesses the non-3GPP access side. In this way, the UE may trigger, through the WLAN AP, the IPsec establishment procedure from the UE to the UPF network element, and continue to perform S520.

S520: The UE sends an IK_authentication request (IK_AUTH request) message to the UPF network element. The UPF network element receives the IK_authentication request message from the UE.

The IK_authentication request message may be used to request the UPF network element to establish an IPsec connection. For example, the IK_authentication request message may include the x device identifier and an IP address of the UE.

The UE may send the IK_authentication request message to the UPF network element based on the pre-obtained identifier of the UPF network element, namely, the IP address of the UPF network element. If the IP address of the UPF network element is the IP address of the UPF network element, the UE may send the IK_authentication request message to the IP address, in other words, initiate an IPsec establishment procedure to the IP address of the UPF. If the IP address of the UPF network element is an FQDN, the UE may determine, by searching a domain name system (domain name system, DNS), an IP address corresponding to the FQDN, namely, the IP address of the UPF network element, and then initiate the IPsec establishment procedure to the IP address.

S521: The UPF network element performs authentication on the UE.

The UPF network element may perform authentication on the UE based on the x device identifier in the IK_authentication request message, for example, determine whether there is a corresponding UE context. For example, if the UPF network element does not find, based on the x device identifier in the IK_authentication request message, the same x device identifier in a local UE context, the UPF network element determines that there is no UE context corresponding to the x device identifier, in other words, the UPF network element determines that the authentication on the UE fails, and rejects the establishment of the IPsec connection. If the UPF network element finds, based on the x device identifier in the IK_authentication request message, the same x device identifier in the local UE context, the UPF network element determines that there is a UE context corresponding to the x device identifier, in other words, the UPF network element determines that the authentication on the UE succeeds, and allows the establishment of the IPsec connection.

S522: The UPF network element sends an IK_authentication response (IK_AUTH response) message to the UE. The UE receives the IK_authentication response message from the UPF network element.

The IK_authentication response message may indicate whether the UPF network element allows the establishment of the IPsec connection to the UE. If the establishment of the IPsec connection is rejected, the procedure ends. If the establishment of the IPsec connection is allowed, both the UE and the UPF network element may derive a security key, for example, a key for encryption and integrity protection, based on the security vector corresponding to the UE. In this way, both the UE and the UPF network element may communicate with each other by using the security key, and the IPsec connection is successfully established.

It may be understood that the IPsec connection is used as an example above, but is not intended as a limitation. For example, the IPsec connection may alternatively be replaced with a transport layer security (transport layer security, TLS) connection, a quick user datagram protocol (user datagram protocol, UDP) internet connections (quick UDP internet connections, QUIC) connection, a multi-path (multi-path, MP) connection, or the like. This is not limited.

It may be understood that in the foregoing descriptions, the identifier of the UPF network element is allocated by reusing the x device identifier, but is not intended as a limitation. For example, the allocation may alternatively be implemented by additionally introducing a newly defined information element, for example, an identifier allocation indication of the UPF network element, which may alternatively be named in another manner. This is not limited. In this case, the UE may further report the identifier allocation indication of the UPF network element. The identifier allocation indication of the UPF network element may be forwarded together with the x device identifier through the AMF network element and the SMF network element sequentially, and finally transferred to the UPF network element, so that the UPF network element allocates the identifier of the UPF network element to the x device based on the identifier allocation indication.

### Scenario 2:

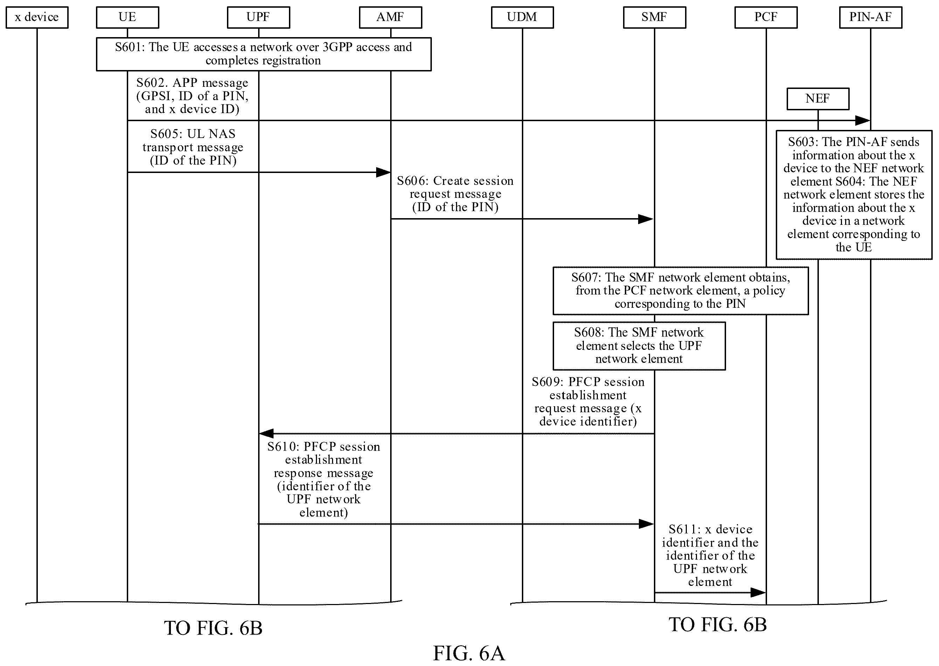

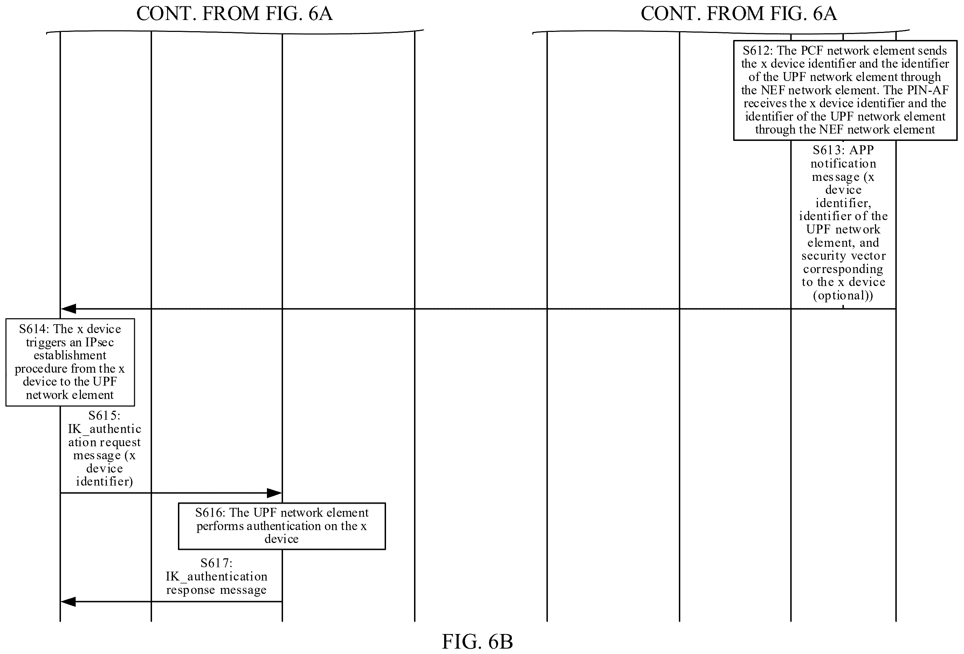

FIG. 6A and FIG. 6B are a second schematic flowchart of a communication method according to an embodiment of this application. The communication method is applicable to the foregoing communication system, and mainly relates to interaction between a UE, an x device, a UPF network element, an AMF network element, an SMF, a PIN-AF, and the like.

In the scenario 2, a UE and an x device are different devices. The UE may be understood as a first terminal, and the x device may be understood as a second terminal. Before the x device accesses a 5GC over non-3GPP access, the UE may trigger an AF corresponding to the x device to send an identifier of a UPF network element, for example, an IP address of the UPF network element, to the x device through the 5GC. When the x device accesses the 5GC over non-3GPP access, the x device does not need to perform NAS interaction, and may establish a connection to the UPF network element by directly using the IP address of the UPF network element. In this way, network deployment costs can be reduced, in other words, an access gateway for non-3GPP access does not need to be deployed on a network side, and implementation costs of the x device can further be reduced, in other words, the x device does not need to support NAS transport over N3G access, to facilitate commercial use of a non-3GPP access to 5GC feature on a live network.

As shown in FIG. 6A and FIG. 6B, a procedure of the communication method is as follows.

S601: A UE accesses a network over 3GPP access and completes registration.

For an implementation of S601, an existing access procedure and an existing registration procedure may be reused. For details, refer to descriptions in a related 3GPP section. Details are not described herein.

S602: The UE sends an application (application, APP) message to a PIN-AF. The PIN-AF receives the APP message from the UE.

The PIN-AF may be an AF that serves an x device and the UE, and is an AF that supports a PIN service. The PIN service may be a special service, for example, a group service. A PIN may represent a corresponding group. If the UE supports the PIN service, the UE may be considered as a member of the group.

The APP message may be used to request the PIN-AF to provide information about the x device (in other words, information about the first terminal), for use of non-3GPP access. For example, the APP message may include at least one of the following: a device identifier of the UE (in other words, an identifier of the second terminal), for example, a generic public subscription identifier (generic public subscription identifier, GPSI), a group identifier such as an ID of a PIN, or an x device identifier (in other words, an identifier of the first terminal). For the x device identifier, refer to the foregoing related descriptions. Details are not described herein again.

It may be understood that, how the UE obtains a PIN-AF address is not limited in embodiments of this application. For example, the PIN-AF address may be pre-configured. In addition, how the UE obtains the x device identifier is also not limited in embodiments of this application. For example, if the x device identifier is two-dimensional code information of the x device, the UE may obtain the x device identifier by scanning a two-dimensional code of the device.

S603: The PIN-AF sends the information about the x device to an NEF network element.

The information about the x device may include the x device identifier and service information of the x device (in other words, service information of the first terminal). The service information of the x device may be pre-configured in the PIN-AF, and may specifically include at least one of the following: a security vector corresponding to the x device (in other words, a security vector corresponding to the first terminal), a service identifier of the x device, for example, a DNN, a QoS parameter of the x device, or location information of the x device (in other words, location information of the first terminal), and optionally, may further include an xUPF request indication (in other words, user plane identifier request indication information), for the network (for example, the 5GC) to allocate a UPF network element identifier (in other words, an identifier of a user plane network element). The UPF network element identifier is identification information of the UPF network element connected to the x device through a non-3GPP access side; in other words, the xUPF request indication explicitly indicates the network to allocate the UPF network element identifier to the x device. For details, refer to the following related descriptions. It may be understood that the xUPF request indication is an optional information element, in other words, if there is no xUPF request indication, the 5GC allocates the UPF network element identifier by default when receiving the information about the x device.

It may be understood that the information about the x device may be carried by using existing signaling, or may be carried by using new signaling. This is not specifically limited herein. In addition, the PIN-AF may further send the device identifier of the UE to the NEF network element, and the device identifier of the UE and the information about the x device may be carried in same signaling or different signaling. This is not specifically limited herein.

S604: The NEF network element stores the information about the x device in a network element corresponding to the UE.

The NEF network element may search, based on the device identifier of the UE, for the network element corresponding to the UE, for example, a network element serving the UE, which may be specifically a UDM network element, a UDR network element, a PCF network element, or the like, so that the information about the x device is stored in the UDM network element, the UDR network element, or the PCF network element. For ease of understanding, an example in which the information about the x device is stored in the UDM network element is used below for description.

S605: The UE sends a UL NAS transport message to an AMF. The AMF receives the UL NAS transport message from the UE.

Information carried in the UL NAS transport message (in other words, a NAS message) is mainly used by the UE to request to establish a PDU session, for example, a PDU session corresponding to the ID of the PIN. For example, the UL NAS transport message may include at least one of the following: an identifier of the UE, such as an SUPI, a PDU session identifier, a DNN of the UE, and a PDU session establishment request message, and optionally may further include an MA PDU request indication. The PDU session establishment request message may further carry information about a service, for example, information about a service related to the x device, and may be specifically the ID of the PIN, or at least one of a DNN and/or slice information that correspond/corresponds to the PIN, to determine a PIN corresponding to the PDU session.

It may be understood that, when performing S602, the UE learns that the UE sends the message to the PIN-AF is for the x device to finally obtain the identifier of the UPF network element. Therefore, after performing S602, the UE continues to perform S605, to trigger a PDU session establishment procedure, so that the x device can finally obtain the identifier of the UPF network element; or a PDU session establishment procedure is reused for the x device to finally obtain the identifier of the UPF network element. For details, refer to the following related descriptions. In addition, an execution sequence of S605 and S603 and S604 is not limited.

S606: The AMF network element sends a create session request message to an SMF network element. The SMF network element receives the create session request message from the AMF network element.

The SMF network element is determined by the AMF network element based on subscription data that is of the UE and that is obtained from the UDM network element. For details, refer to descriptions in a related 3GPP section. Details are not described herein.

The create session request message may include at least one of the following: the identifier of the UE, the PDU session identifier, the DNN of the UE, the PDU session establishment request message, or the MA PDU request indication (optional); in other words, the AMF network element may encapsulate the information in the UL NAS transport message into the create session request message, and then send the create session request message to the SMF network element.

S607: The SMF network element obtains, from the PCF network element, a policy corresponding to the PIN.

The SMF network element may determine, based on the ID of the PIN in the PDU session establishment request message or at least one of the DNN and/or the slice information that correspond/corresponds to the PIN, the PIN corresponding to the PDU session, to obtain the policy corresponding to the PIN from the PCF network element. For example, the SMF network element sends the ID of the PIN, or at least one of the DNN and/or the slice information that correspond/corresponds to the PIN to the PCF network element, so that the PCF network element determines the PIN corresponding to the at least one piece of information. The PCF network element may obtain, from the UDM network element, the policy corresponding to the PIN. For example, the PCF network element sends the ID of the PIN to the UDM network element, so that the UDM network element returns, to the PCF network element, information including the ID of the PIN, namely, the information about the x device. The PCF network element may include the information about the x device in the policy corresponding to the PIN and return the policy to the SMF network element.

S608: The SMF network element selects the UPF network element.

The SMF network element may obtain the location information of the x device and/or the DNN of the x device from the information about the x device, and select the corresponding UPF network element based on the location information of the x device and/or the DNN of the x device.

S609: The SMF network element sends a PFCP session establishment request message to the UPF network element. The UPF network element receives the PFCP session establishment request message from the SMF network element.

S610: The UPF network element sends a PFCP session establishment response message to the SMF network element. The SMF network element receives the PFCP session establishment response message from the UPF network element.

For specific implementations of S609 and S610, refer to related descriptions of S508 and S509. Details are not described herein again.

S611: The SMF network element sends the x device identifier and the identifier of the UPF network element to the PCF network element.

The identifier of the UPF network element is the IP address of the UPF network element. In other words, when the SMF network element obtains the identifier of the UPF network element, the SMF network element may return the x device identifier and the identifier of the UPF network element to the PCF network element based on the xUPF request indication obtained from the PCF network element in advance. Certainly, if there is no xUPF request indication, the SMF network element may also send the x device identifier and the identifier of the UPF network element to the PCF network element by default.

It may be understood that the information about the x device may be carried in existing signaling, or may be carried in new signaling. This is not limited.

S612: The PCF network element sends the x device identifier and the identifier of the UPF network element through the NEF network element. The PIN-AF receives the x device identifier and the identifier of the UPF network element through the NEF network element.

Similarly, when the PCF network element obtains the identifier of the UPF network element, the PCF network element may also return the x device identifier and the identifier of the UPF network element to the NEF network element based on the xUPF request indication obtained from the NEF network element in advance. Certainly, if there is no xUPF request indication, the PCF network element may send the x device identifier and the identifier of the UPF network element to the NEF network element by default. In addition, the PCF network element may further send the device identifier of the UE, for example, the GPSI and the group identifier such as the ID of the PIN to the NEF network element. Correspondingly, the NEF network element may send, to the PIN-AF, the information received from the PCF network element. In this case, the PIN-AF obtains and stores the identifier that is of the UPF network element and that corresponds to the x device identifier.

S613: The PIN-AF sends an APP notification message to the x device. The x device receives the APP notification message from the PIN-AF.

The APP notification message includes the identifier of the UPF network element, and optionally, may further include at least one of the following: the x device identifier and the security vector that corresponds to the x device. In this way, the x device obtains the identifier of the UPF network element, and optionally, may further obtain the security vector corresponding to the x device.

S614: The x device triggers an IPsec establishment procedure from the x device to the UPF network element.

S615: The x device sends an IK_authentication request message to the UPF network element. The UPF network element receives the IK_authentication request message from the x device.

S616: The UPF network element determines to perform authentication on the x device.

S617: The UPF network element sends an IK_authentication response message to the x device. The x device receives the IK_authentication response message from the UPF network element.

For specific implementations of S614 to S617, refer to related descriptions of S519 to S522. Details are not described herein again.

### Scenario 3:

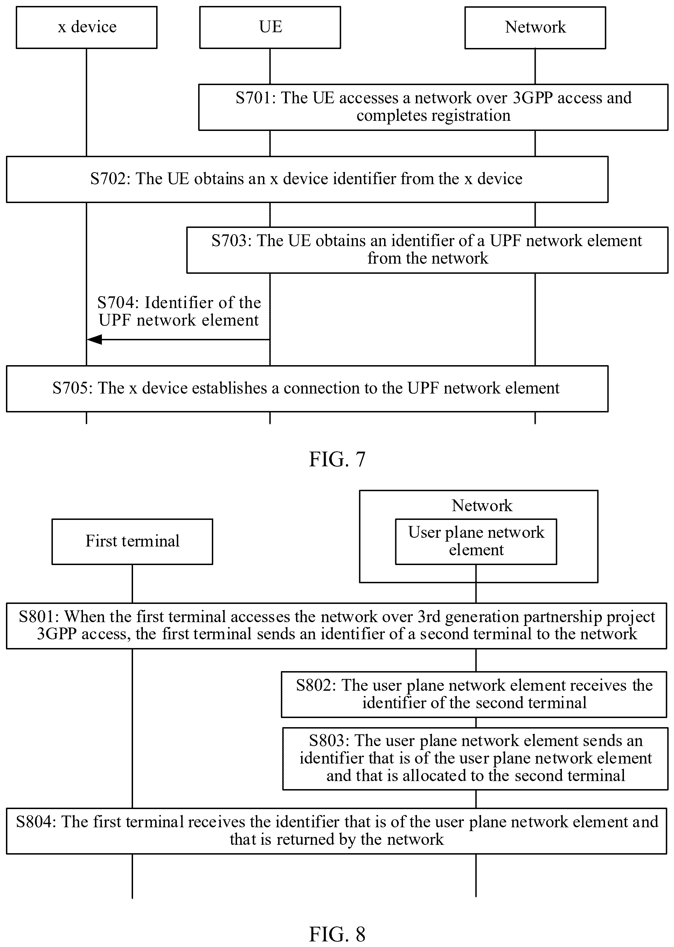

FIG. 7 is a third schematic flowchart of a communication method according to an embodiment of this application. The communication method is applicable to the foregoing communication system, and mainly relates to interaction between a UE, an x device, a UPF network element, an AMF network element, an SMF, a PIN-AF, and the like. In the scenario 3, a UE and an x device are different devices. The UE may be understood as a first terminal, and the x device may be understood as a second terminal. The UE may first obtain an x device identifier from the x device. After accessing a 5GC over 3GPP access, the UE may obtain an identifier that is of a UPF network element and that is of the x device from the 5GC, for example, an IP address of the UPF network element, and send the identifier of the UPF network element to the x device. When the x device accesses the 5GC over non-3GPP access, the x device does not need to perform NAS interaction, and may establish a connection to the UPF network element by directly using the IP address of the UPF network element. In this way, network deployment costs can be reduced, in other words, an access gateway for non-3GPP access does not need to be deployed on a network side, and implementation costs of the x device can further be reduced, in other words, the x device does not need to support NAS transport over N3G access, to facilitate commercial use of a non-3GPP access to 5GC feature on a live network.

As shown in FIG. 7, a procedure of the communication method is as follows.

S701: A UE accesses a network over 3GPP access and completes registration.

For an implementation of S701, an existing access procedure and an existing registration procedure may be reused. For details, refer to descriptions in a related 3GPP section. Details are not described herein.

S702: The UE obtains an x device identifier from an x device.

The UE may establish a connection to the x device, for example, a Bluetooth connection or a WLAN connection.

S703: The UE obtains an identifier of a UPF network element from the network.

For a specific implementation of S703, refer to related descriptions of S502 to S518. Details are not described herein again.

S704: The UE sends the identifier of the UPF network element to the x device.

The UE sends the identifier of the UPF network element to the x device through the connection to the x device.

S705: The x device establishes a connection to the UPF network element.

For a specific implementation of S705, refer to related descriptions of S519 to S522. Details are not described herein again.

Specific procedures in the scenario 1 to the scenario 3 are separately described above with reference to FIG. 5A to FIG. 7. An overview of the procedures in the scenario 1 to the scenario 3 is provided below with reference to FIG. 8 to FIG. 11.

FIG. 8 is a fourth schematic flowchart of a communication method according to an embodiment of this application. The communication method is applicable to the foregoing communication system, and mainly relates to interaction between a terminal, for example, a first terminal and a second terminal, and a network, for example, a user plane network element (UPF network element), an access and mobility management network element (AMF network element), and a session management network element (SMF network element). For example, the first terminal may send an identifier of the second terminal to the network, to obtain an identifier of the user plane network element. Details are described below.

S801: When a first terminal accesses a network over 3rd generation partnership project 3GPP access, the first terminal sends an identifier of a second terminal to the network.

The first terminal may be the foregoing UE, the second terminal may be the foregoing x device, and the second terminal has a non-3GPP access capability. The first terminal and the second terminal may be different devices, or may be a same device.

If the first terminal and the second terminal are different devices, the identifier of the second terminal may be the foregoing x device identifier, namely, the identifier of the UE, and is used to select a network element of a user plane for the second terminal. The first terminal may obtain the identifier of the second terminal from the second terminal, in other words, may obtain the identifier of the second terminal as required, and does not need to always retain the identifier of the second terminal, so that storage overheads can be reduced. For example, the first terminal establishes a connection to the second terminal, and obtains the identifier of the second terminal through the connection. For example, the first terminal may request, from the second terminal through the connection, information that identifies the second terminal. In this way, the first terminal may receive, through the connection, the identifier that is of the second terminal and that is returned by the second terminal; the second terminal may actively send the identifier of the second terminal to the first terminal through the connection in response to the establishment of the connection to the first terminal; or the first terminal scans identification information (for example, a two-dimensional code identifier) of the second terminal to obtain the identifier of the second terminal. For details, refer to related descriptions of S702 and S703. Details are not described herein again.

If the first terminal and the second terminal are a same device, the identifier of the second terminal is an identifier of the first terminal, and may be pre-configured locally in the first terminal. For details, refer to related descriptions of S702 and S703. Details are not described herein again.

The first terminal may send the identifier of the second terminal to the network in a session establishment process, or may send the identifier of the second terminal through a user plane tunnel after a session is established. Descriptions are separately provided below.

Manner 1: The first terminal sends the identifier of the second terminal to the network in the session establishment process.

The first terminal may send a first NAS message to an access and mobility management network element. The first NAS message may be used by the first terminal to request to establish a session, in other words, trigger the session establishment procedure, and may further carry the identifier of the second terminal. The first NAS message may be specifically a session establishment request message or a PDU session establishment request message. For details, refer to related descriptions of S501 and S502. Details are not described again. Alternatively, the first NAS message may be a NAS message including a PDU session establishment request message. In this case, the identifier of the second terminal may be carried in the first NAS message, or the identifier of the second terminal may be carried in the PDU session establishment request message. This is not limited.

The access and mobility management network element may receive the identifier of the second terminal from the first terminal, for example, receive the first NAS message from the first terminal, and send the identifier of the second terminal to a session management network element, for example, send a session establishment request message carrying the identifier of the second terminal. In this case, the session establishment request message may include the PDU session establishment request message previously sent by the terminal, and the identifier of the second terminal may be carried in the session establishment request message or the PDU session establishment request message. For details, refer to related descriptions of S503 and S504. Details are not described again.

Optionally, the session establishment request message may further carry a security vector corresponding to the second terminal, and the security vector is information used by the second terminal when the second terminal establishes a secure connection to a user plane through a non-3GPP access side connection; in other words, the session management network element may reuse the session establishment procedure, and obtain the security vector corresponding to the second terminal from the access and mobility management network element, to reduce implementation difficulty and complexity. Certainly, the session management network element may alternatively obtain the security vector corresponding to the second terminal from another network element, for example, a data management network element or an application function, to implement decoupling from the session establishment procedure, and the procedure is more flexible. In addition, for the foregoing descriptions, refer to related descriptions of S503 and S504. Details are not described again.

It may be understood that when the first terminal and the second terminal are a same device, the security vector corresponding to the second terminal may also be referred to as a security vector corresponding to the first terminal. This is not limited in embodiments of this application in terms of expression.

The session management network element may receive the identifier of the second terminal, for example, receive the session establishment request message from the access and mobility management network element. In this way, the session management network element may obtain an identifier of a user plane network element based on the identifier of the second terminal. For example, the session management network element may select, based on the identifier of the second terminal, a user plane network element supporting non-3GPP access, to determine an identifier of the user plane network element (which is determined by the session management network element or pre-configured locally in the session management network element), or obtain the identifier of the user plane network element from the user plane network element. For details, refer to related descriptions of S802 and S803.

Manner 2: The first terminal sends the identifier of the second terminal through the user plane tunnel after the session is established.

The first terminal may send a first message of the user plane to the user plane network element in the network. For example, the first terminal first sends the first message to an access network device through the user plane tunnel, and then the access network device forwards the first message to the user plane network element through the user plane tunnel. In this case, the first terminal cannot directly sense existence of the user plane network element. The first message may carry the identifier of the second terminal, to request to allocate, to the second terminal, identification information that identifies the user plane network element connected to the second terminal through a non-3GPP access side. For details, refer to related descriptions of S512 and S513. Details are not described herein again. Then, the following S802 and S803 continue to be performed.

S802: The user plane network element receives the identifier of the second terminal.

### For example, in the foregoing manner A:

The session management network element may select the user plane network element based on the identifier of the second terminal, and send a PFCP session establishment request message to the user plane network element. Correspondingly, the user plane network element may receive the PFCP session establishment request message from the session management network element, where the PFCP session establishment request message may carry the identifier of the second terminal, to request to allocate, to the second terminal, identification information that identifies the user plane network element connected to the second terminal through a non-3GPP access side. For details, refer to related descriptions of S505 to S508. Details are not described herein again.

It may be understood that when the first terminal and the second terminal are a same device, in other words, the identifier of the second terminal is the identifier of the first terminal, an existing PFCP session establishment request message usually also carries the identifier of the second terminal. However, a difference from the conventional technology lies in that, in this embodiment of this application, although the identifier of the second terminal is reused, a capability of the identifier of the second terminal may be enhanced. For example, the identifier of the second terminal may implicitly indicate that the second terminal supports non-3GPP access, so that the user plane network element may allocate the identifier of the user plane network element to the second terminal based on a case in which the second terminal supports non-3GPP access, in other words, an existing information element is reused for implementation. Therefore, overheads can be reduced. Certainly, a newly defined information element may alternatively be used for implementation, to implement decoupling from the existing information element, and transfer is more flexible.

Optionally, the PFCP session establishment request message may further carry the security vector corresponding to the second terminal, in other words, the session management network element may configure, for the user plane network element in advance, the security vector required for establishing a user plane connection, without needing to be derived by the user plane network element, so that overheads of the user plane network element can be reduced. Certainly, the user plane network element may alternatively derive the security vector. This is not limited. In addition, refer to related descriptions of S505 to S508. Details are not described again.

### For example, in the foregoing manner B:

The user plane network element may receive the first message from the user plane of the first terminal, where the first message may carry the identifier of the second terminal. For details, refer to related descriptions of S512 and S513. Details are not described again.

Optionally, the user plane network element may further obtain a security vector corresponding to the second terminal. For example, the user plane network element may send the identifier of the second terminal to the session management network element, and the session management network element receives the identifier of the second terminal from the user plane network element, for example, sends a PFCP request message carrying the identifier of the second terminal. In this way, the session management network element may send, to the user plane network element based on the identifier of the second terminal, the security vector corresponding to the second terminal, and send a PFCP response message carrying the security vector corresponding to the second terminal. In other words, the user plane network element may actively request the session management network element to provide the security vector corresponding to the second terminal, to implement on-demand provision and avoid redundancy. In addition, refer to related descriptions of S514 to S517. Details are not described again.

S803: The user plane network element sends the identifier that is of the user plane network element and that is allocated to the second terminal.

The identifier of the user plane network element, for example, the identifier of the UPF network element, is the identification information of the user plane network element connected to the second terminal through the non-3GPP access side, and may be specifically an IP address of the user plane network element, for example, the IP address of the UPF network element. For details, refer to related descriptions of S509. Details are not described herein again.

### For example, in the foregoing manner A:

The user plane network element may allocate the identifier of the user plane network element to the second terminal based on the identifier of the second terminal, or the user plane network element may allocate the identifier of the user plane network element based on a request message (for example, the PFCP session establishment request message), or the user plane network element may allocate the identifier of the user plane network element based on indication information sent by another SMF. A specific implementation is not limited in embodiments of this application. The user plane network element may send, to the session management network element, a PFCP session establishment response message carrying the identifier of the user plane network element. Correspondingly, the session management network element may further send, to the access and mobility management network element, a session establishment response message carrying the identifier of the user plane network element. The session establishment response message includes the following PDU session establishment success message sent to the terminal. The identifier of the user plane network element is carried in the session establishment response message, or is carried in the PDU session establishment success message sent to the UE. A specific implementation is not limited in embodiments of this application.

Optionally, the session establishment response message further carries the security vector corresponding to the second terminal; in other words, the security vector required for establishing the user plane connection is configured by the first terminal for the second terminal in advance, without needing to be derived by the second terminal. Therefore, this can reduce overheads of the second terminal and is more conductive to energy saving. Certainly, the second terminal may alternatively derive the security vector. This is not limited. In addition, for the foregoing descriptions, refer to related descriptions of S509 and S510. Details are not described herein again.

### For example, in the foregoing manner B:

The user plane network element may send a second message of the user plane to the first terminal. The second message may carry the identifier of the user plane network element. For details, refer to related descriptions of S518. Details are not described again. Optionally, the second message may further carry the security vector corresponding to the second terminal. Certainly, the first terminal may alternatively derive the security vector. This is not limited. In addition, for the foregoing descriptions, still refer to related descriptions of S518. Details are not described herein again.

S804: The first terminal receives the identifier that is of the user plane network element and that is returned by the network.

### For example, in the foregoing manner A:

The first terminal may receive a second NAS message returned by the access and mobility management network element. The second NAS message indicates that the session is successfully established, for example, a session establishment success message or a PDU session establishment success message. The PDU session establishment success message carries the identifier of the user plane network element. For details, refer to related descriptions of S511. Details are not described herein again. Alternatively, the second NAS message may be a NAS message including a PDU session establishment success message. In this case, the identifier of the user plane network element may be carried in the second NAS message, or the identifier of the user plane network element may be carried in the PDU session establishment success message.

It may be understood that, because selection of the user plane network element is involved in the session establishment process, the first terminal may reuse an existing session establishment procedure, to select, in a case of 3GPP access, a user plane network element used for non-3GPP access, and obtain an identifier of the user plane network element. In comparison with an implementation using a newly defined procedure, this implementation is simpler and costs fewer communication overheads. Certainly, a newly defined procedure may alternatively be used for implementation, to implement decoupling from the existing procedure, and information element transfer is more flexible.

### For example, in the foregoing manner B:

The first terminal may receive the second message that is of the user plane and that is returned by the user plane network element. The second message carries the identifier of the user plane network element. For details, refer to related descriptions of S518. Details are not described herein again.

It may be understood that, if the first terminal has been over 3GPP access and established the user plane connection, the first terminal may reuse a user plane message, for example, the first message and the second message, to directly obtain the identifier of the user plane network element from the user plane network element, in other words, reuse the user plane tunnel established via 3GPP, to obtain the identifier of the user plane network element used for non-3GPP access. In comparison with an implementation using a newly defined procedure, this implementation is simpler and costs fewer communication overheads. Certainly, a newly defined procedure may alternatively be used for implementation, to implement decoupling from the existing procedure, and information element transfer is more flexible.

It may be understood that, it can be learned from the foregoing descriptions that the security vector corresponding to the second terminal may be carried in a NAS message or a message of the user plane that is sent by the network to the first terminal, in other words, the security vector may be obtained by reusing the session establishment or the user plane tunnel. In comparison with an implementation using a newly defined procedure, this implementation is simpler and costs fewer communication overheads. Certainly, a newly defined procedure may alternatively be used for implementation, to implement decoupling from the existing procedure, and information element transfer is more flexible. In this case, when the first terminal and the second terminal are different devices, the first terminal sends at least one of the identifier of the user plane network element and the security vector that corresponds to the second terminal, so that the second terminal directly establishes a secure connection to the user plane network element through the non-3GPP access side connection. For details, refer to the following related descriptions. Details are not described herein again. Certainly, the security vector corresponding to the second terminal is pre-configured locally in the second terminal, in other words, the security vector does not need to be provided by another network element or device, to reduce communication overheads.

In conclusion, the first terminal over 3GPP access may be reused, and the identifier of the user plane network element for the second terminal may be obtained from the network, so that the second terminal directly communicates with the user plane network element through the non-3GPP access side connection, in other words, directly establishes the user plane connection by bypassing an N3G access gateway. In this way, the N3G access gateway may not be deployed in the network, and the terminal may not support transmission of a NAS message over N3G access, so that the user plane connection over non-3GPP access can be established at reduced costs.

Optionally, with reference to the method shown in FIG. 8, the method further includes: When the first terminal and the second terminal are a same terminal, when the first terminal accesses the network over non-3GPP access, the first terminal establishes the secure connection to the user plane network element based on the identifier of the user plane network element, in other words, directly establishes the user plane connection by bypassing the N3G access gateway, to establish the user plane connection over non-3GPP access at reduced costs. For example, the first terminal may establish the secure connection to the user plane network element based on the identifier of the user plane network element by using the security vector corresponding to the first terminal, to ensure communication security and avoid a security risk. For details, refer to related descriptions of S519 to S522. Details are not described herein again.

Optionally, with reference to the method shown in FIG. 8, if the first terminal and the second terminal are a same terminal, the method further includes: When the first terminal accesses the network over non-3GPP access, the first terminal establishes the secure connection to the user plane network element based on the identifier of the user plane network element, in other words, directly establishes the user plane connection by bypassing the N3G access gateway, to establish the user plane connection over non-3GPP access at reduced costs. For example, the first terminal may establish the secure connection to the user plane network element based on the identifier of the user plane network element by using the security vector corresponding to the first terminal, to ensure communication security and avoid a security risk. For details, refer to related descriptions of S519 to S522. Details are not described herein again.

Optionally, with reference to the method shown in FIG. 8, if the first terminal and the second terminal are different terminals, the method further includes: The second terminal receives the identifier of the user plane network element; and when the second terminal accesses the network over non-3GPP access, the second terminal establishes the secure connection to the user plane network element based on the identifier of the user plane network element. For example, the second terminal may establish the secure connection to the user plane network element based on the identifier of the user plane network element by using the security vector corresponding to the second terminal, to ensure communication security and avoid a security risk. For details, refer to related descriptions of S705. Details are not described herein again.

In FIG. 8, interaction between the terminal and the network elements such as the user plane network element, the session management network element, and the access and mobility management network element are mainly described. In the following descriptions, a network in which network elements are located is considered as a whole, and interaction between a terminal and the network is described.

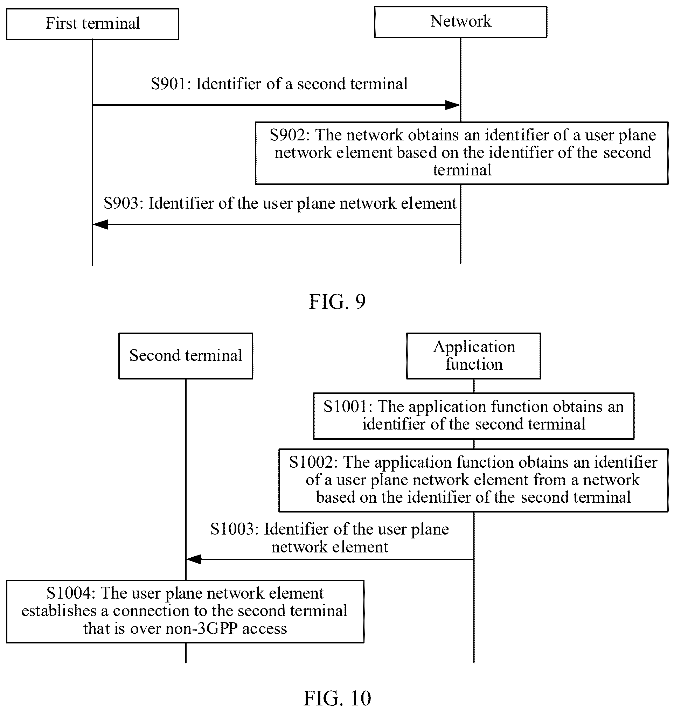

FIG. 9 is a fifth schematic flowchart of a communication method according to an embodiment of this application. The communication method is applicable to the foregoing communication system, and mainly relates to interaction between a terminal and a network.

As shown in FIG. 9, a specific process is as follows.

S901: A first terminal sends an identifier of a second terminal to a network, and the network receives the identifier of the second terminal from the first terminal.

The identifier of the second terminal may be carried in any one of the following: a first NAS message, a first message of a user plane, a create session request message, or a PFCP request message.

S902: The network obtains an identifier of a user plane network element based on the identifier of the second terminal.

The identifier of the user plane network element may be identification information of the user plane network element connected to the second terminal through a non-3GPP access side, and may be specifically an IP address of the user plane network element.

S903: The network sends the identifier of the user plane network element to the first terminal, and the first terminal receives the identifier that is of the user plane network element and that is returned by the network.

The identifier of the user plane network element may be carried in any one of the following: a second NAS message, a second message of the user plane, a create session response message, or a PFCP response message.

It may be understood that, for specific implementations of S901 to S903, refer to related descriptions of FIG. 5A, FIG. 5B, and FIG. 5C, FIG. 7, or FIG. 8. Details are not described herein again.

FIG. 10 is a sixth schematic flowchart of a communication method according to an embodiment of this application. The communication method is applicable to the foregoing communication system, and mainly relates to interaction between a terminal, for example, a first terminal and a second terminal, and a network, for example, a user plane network element (UPF network element), an access and mobility management network element (AMF network element), a session management network element (SMF network element), and an application function (PIN-AF). For example, a first terminal may send an identifier of a second terminal to an application function, to trigger a network to return an identifier of a user plane network element. Details are described below.

S1001: An application function obtains an identifier of a second terminal.

The second terminal has a non-3GPP access capability. The identifier of the second terminal may be understood as an x device identifier, and indicates that the second terminal supports non-3GPP access. The application function may receive the identifier of the second terminal from a first terminal, in other words, a terminal identifier carried in a NAS message sent by the first terminal is the identifier of the second terminal. In other words, because the second terminal usually has no network discovering capability, to be specific, before the application function actively communicates with the second terminal, the second terminal may not discover the application function, and cannot sense existence of the application function. Therefore, another device (for example, the first terminal) that can communicate with the application function may act as a proxy for the second terminal for communicating with the application function, so that a requirement of the second terminal can be finally transferred to the application function.

S1002: The application function obtains an identifier of a user plane network element from a network based on the identifier of the second terminal.

The application function may determine service information of the second terminal based on the identifier of the second terminal, and send information about the second terminal to the network (for example, a capability exposure network element). In this way, the application function may receive the identifier that is of the user plane network element supporting non-3GPP access and that is returned by the network for the information about the second terminal. In other words, the application function may provide information related to a service of the second terminal for the network, so that the network determines the user plane network element related to the service, and allocates the identifier of the user plane network element. In this way, a failure of the service caused by mismatching between the service and bearing of a user plane can be avoided. The identifier of the user plane network element is an IP address of the user plane network element, so that the second terminal can directly access the user plane network element. Details are described below.

First, the information about the second terminal may include the identifier of the second terminal and the service information of the second terminal. The service information of the second terminal is service information that is of the second terminal and that is related to a PIN, or may be any other possible service, which may be selected based on an actual situation. This is not limited. The service information of the second terminal may include at least one of an identifier of a PIN, a DNN, information about a slice, a security vector corresponding to the second terminal, and location information of the second terminal, so that the user plane network element determined by the network is a user plane network element that matches a security requirement and a location of the terminal, to ensure that bearing of the user plane for the service is secure and reliable. In addition, for a specific implementation of the service information of the second terminal, refer to related descriptions of S801 to S803. Details are not described herein again.

Optionally, the information about the second terminal may further include: user plane identifier request indication information, where the user plane identifier request indication information is used to request the network to allocate the user plane network element identifier, and the user plane network element identifier is identification information of the user plane network element connected to the terminal through a non-3GPP access side, in other words, the user plane identifier request indication information explicitly indicates the network to allocate the user plane network element identifier to the second terminal. In other words, if the user plane identifier request indication information is not provided for the network, the network does not allocate the user plane network element identifier, to implement on-demand allocation and avoid redundancy. Certainly, the user plane identifier request indication information is an optional information element. For example, the network may alternatively allocate the user plane network element identifier by default when receiving the information about the second terminal.

Optionally, the application function may further send an identifier of the first terminal to the network (for example, the capability exposure network element). The identifier of the first terminal may be used to determine a network element serving the first terminal, and/or indicate that the network needs to store the information about the second terminal in the network element serving the first terminal. In other words, because the second terminal may also has no capability of communicating with the network, the network may not have a network serving the second terminal. Therefore, the information about the second terminal may be stored in a corresponding network element of a proxy (for example, the first terminal) for the second terminal for communication, to avoid information loss of the second terminal.

Then, the capability exposure network element may receive the information about the second terminal and the identifier of the first terminal (optional) from the application function. The capability exposure network element may determine, based on the identifier of the first terminal, the network element serving the first terminal, and store the information about the second terminal in the network element (for example, a data management network element or a policy control network element) serving the first terminal. For details, refer to related descriptions of S604. Details are not described herein again. Certainly, if the capability exposure network element does not receive the identifier of the first terminal, the capability exposure network element may store, by default, the information about the second terminal in the network element serving the first terminal. For example, a correspondence between the second terminal and the first terminal is pre-configured in the capability exposure network element, so that when receiving the information about the second terminal, the capability exposure network element stores, by default, the information about the second terminal in a network element corresponding to the first terminal corresponding to the second terminal.

Then, the session management network element may obtain the information about the second terminal. For example, the session management network element may receive information about a service from the first terminal. The information about the service may be information about a service related to the second terminal, for example, at least one of the identifier of the PIN, the DNN, and the information about the slice. For details, refer to related descriptions of S605 and S606. Details are not described herein again. The session management network element may obtain, based on the information about the service, the information about the second terminal from the network element serving the first terminal. For details, refer to related descriptions of S607. It may be understood that, when the first terminal acts as a proxy for the second terminal for communication, the information about the second terminal may be stored in the network element serving the first terminal, so that the session management network element may obtain the information about the second terminal from the network element when required.

In addition, the session management network element may obtain, based on the information about the second terminal, the identifier that is of the user plane network element and that corresponds to the second terminal. The identifier of the user plane network element is the identification information of the user plane network element connected to the second terminal through the non-3GPP access side, for example, may be an IP address of the user plane network element. For details, refer to the foregoing related descriptions. Details are not described herein again. For example, the session management network element may select the user plane network element based on the information about the second terminal. The session management network element sends the identifier of the second terminal to the user plane network element, for example, sends a PFCP session establishment request message that carries the identifier of the second terminal. Correspondingly, the user plane network element may receive the identifier of the second terminal from the session management network element, for example, receive the PFCP session establishment request message that carries the identifier of the second terminal. For details, refer to S608 and S609. The user plane network element may allocate the identifier of the user plane network element to the second terminal based on the identifier of the second terminal. For example, the user plane network element sends, to the session management network element based on the identifier of the second terminal, a PFCP session establishment response message. Correspondingly, the session management network element may receive the PFCP session establishment response message returned by the user plane network element for the PFCP session establishment request message. The PFCP session establishment response message may carry the identifier of the user plane network element. For details, refer to S608 to S610.

Optionally, the PFCP session establishment request message may further carry the security vector corresponding to the second terminal, and the security vector may be information used when the second terminal establishes a secure connection of the user plane through the non-3GPP access side connection. In other words, the session management network element sends the security vector corresponding to the second terminal to the user plane network element in advance. Certainly, the session management network element may alternatively not send the security vector corresponding to the second terminal, and the security vector may be pre-configured in the user plane network element, or may be derived by the user plane network element.

Finally, the session management network element may send the identifier of the user plane network element. For example, the session management network element may send the identifier of the second terminal and the identifier of the user plane network element to the network element serving the first terminal. Correspondingly, the network element serving the first terminal may return the identifier of the second terminal and the identifier of the user plane network element to the application function. In this way, the application function obtains the identifier of the user plane network element. For details, refer to related descriptions of S610 and S611. Details are not described herein again.

S1003: The application function sends the identifier of the user plane network element to the second terminal.

The application function may send, to the second terminal, an APP notification message that carries the identifier of the user plane network element. Correspondingly, the second terminal receives the APP notification message that carries the identifier of the user plane network element. Optionally, the application function may further send, to the second terminal, the security vector corresponding to the second terminal, in other words, the security vector corresponding to the second terminal is carried in a message from the application function. In other words, the application function may configure, for the terminal in advance, the security vector required for establishing a user plane connection, without needing to be derived by the terminal. Therefore, this can reduce overheads of the terminal and is more conductive to energy saving. Certainly, the terminal may alternatively derive the security vector. This is not limited.

In addition, for a specific implementation of S1003, refer to related descriptions of S612. Details are not described herein again.

In addition, the foregoing implementations of S1001 to S1003 are merely an example, and are not limited. For example, the second terminal may alternatively send the identifier of the second terminal to the first terminal, and receive the identifier of the user plane network element from the first terminal. For details, refer to related descriptions of FIG. 9. Details are not described herein again.

S1004: When the second terminal accesses the network over non-3GPP access, the second terminal establishes a connection to the user plane network element based on the identifier of the user plane network element.

The second terminal may request, based on the identifier of the user plane network element, to establish the connection to the user plane network element. Correspondingly, the user plane network element may receive the secure connection establishment request sent by the second terminal over non-3GPP access, and the user plane network element establishes the connection to the second terminal. For example, both the user plane network element and the second terminal establish a secure connection to the user plane network element by using the security vector corresponding to the second terminal.

In addition, for a specific implementation of S1004, refer to related descriptions of S613 to S616. Details are not described herein again.

In conclusion, the application function may actively obtain the identifier of the user plane network element from the network (for example, the session management network element in the network), and provide the identifier for the terminal, so that the terminal directly communicates with the user plane network element through the non-3GPP access side connection, in other words, directly establishes the user plane connection by bypassing an N3G access gateway. In this way, the N3G access gateway may not be deployed in the network, and the UE may also not support transmission of a NAS message over N3G access, so that a user plane connection over non-3GPP access can be established at reduced costs.

In FIG. 10, interaction between the second terminal, the first terminal, and the network elements such as the user plane network element, the session management network element, and the access and mobility management network element are mainly described. In the following descriptions, a network in which network elements are located is considered as a whole, and interaction between a terminal and the network is described.

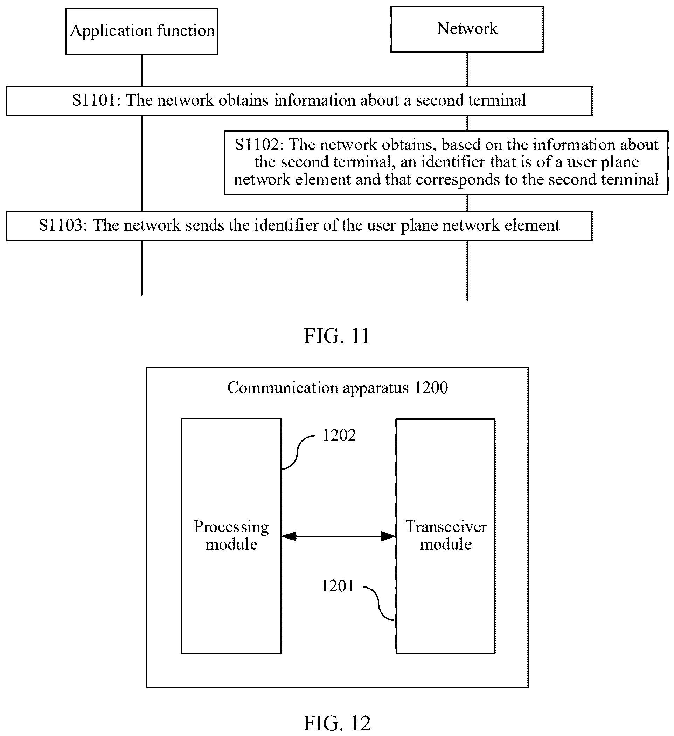

FIG. 11 is a seventh schematic flowchart of a communication method according to an embodiment of this application. The communication method is applicable to the foregoing communication system, and mainly relates to interaction between a terminal and a network.

As shown in FIG. 11, a specific process is as follows.

S1101: A network obtains information about a second terminal.

The network may obtain the information about the second terminal from an application function corresponding to the second terminal.

S1102: The network obtains, based on the information about the second terminal, an identifier that is of a user plane network element and that corresponds to the second terminal.

The identifier of the user plane network element is identification information of the user plane network element connected to the second terminal through a non-3GPP access side. For example, the network may receive information about a service from a first terminal. The information about the service may be information about a service related to the second terminal, for example, at least one of an identifier of a PIN, a DNN, and information about a slice. In this way, the network may obtain the identifier of the user plane network element based on the information about the second terminal in response to the information about the service.

S1103: The network sends the identifier of the user plane network element.

The network may send the identifier of the user plane network element to the application function.

It may be understood that, for specific implementations of S1101 to S1103, refer to related descriptions of FIG. 6A and FIG. 6B or FIG. 10. Details are not described herein again.

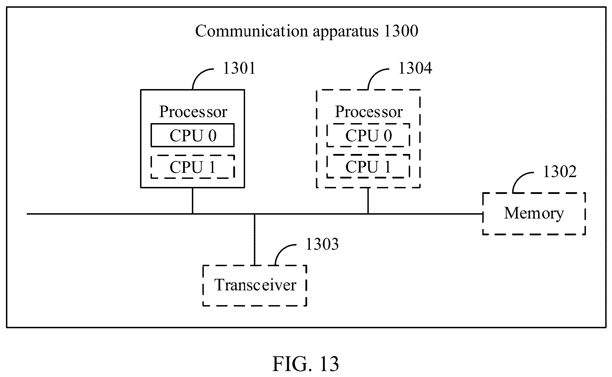

The communication methods provided in embodiments of this application are described above in detail with reference to FIG. 5A to FIG. 11. Communication apparatuses configured to perform the communication method provided in embodiments of this application are described below in detail with reference to FIG. 12 and FIG. 13.

FIG. 12 is a first diagram of a structure of a communication apparatus according to an embodiment of this application. For example, as shown in FIG. 12, the communication apparatus 1200 includes a transceiver module 1201 and a processing module 1202. For ease of description, FIG. 12 shows only main parts of the communication apparatus.

The transceiver module 1201 is configured to perform sending and receiving functions in the methods shown in FIG. 5A to FIG. 11, and the processing module 1202 is configured to perform a function other than the sending and receiving functions in the methods shown in FIG. 5A to FIG. 11.

Optionally, the transceiver module 1201 may include a sending module (not shown in FIG. 12) and a receiving module (not shown in FIG. 12). The sending module is configured to implement a sending function of the communication apparatus 1200, and the receiving module is configured to implement a receiving function of the communication apparatus 1200.

Optionally, the communication apparatus 1200 may further include a storage module (not shown in FIG. 12). The storage module stores a program or instructions. When the processing module 1202 executes the program or the instructions, the communication apparatus 1200 is enabled to perform the functions of the remote UE or the remote device in the methods shown in FIG. 5A to FIG. 11 in the foregoing method.

It should be noted that the communication apparatus 1200 may be a terminal or a network device, may be a chip (system) or another part or component that may be disposed in a terminal or a network device, or may be an apparatus that includes a terminal or a network device. This is not limited in this application.

For technical effects of the communication apparatus 1200, refer to the technical effects of the communication methods shown in FIG. 5A to FIG. 11. Details are not described herein again.

FIG. 13 is a second diagram of a structure of a communication apparatus according to an embodiment of this application; For example, the communication apparatus may be a terminal, or may be a chip (system) or another part or component that may be disposed in the terminal. As shown in FIG. 13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected to the memory 1302 and the transceiver 1303 through a communication bus.

The following specifically describes each part of the communication apparatus 1300 with reference to FIG. 13.

The processor 1301 is a control center of the communication apparatus 1300, and may be one processor, or may be a collective term of a plurality of processing elements. For example, the processor 1301 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, processor 1301 may perform various functions of the communication apparatus 1300, for example, perform the communication methods shown in FIG. 5A to FIG. 11 by running or executing a software program stored in the memory 1302 and invoking data stored in the memory 1302.

During specific implementation, in an embodiment, the processor 1301 may include one or more CPUs, for example, a CPU 0 and a CPU 1 shown in FIG. 13.

During specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may be one or more devices, circuits, and/or processing cores configured to process data (for example, computer program instructions).

The memory 1302 is configured to store the software program for executing the solutions in this application, and the processor 1301 controls execution. For a specific implementation, refer to the foregoing method embodiments. Details are not described herein again.

Optionally, the memory 1302 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto. The memory 1302 and the processor 1301 may be integrated together, or may exist independently, and is coupled to the processor 1301 through an interface circuit (not shown in FIG. 13) of the communication apparatus 1300. This is not specifically limited in embodiments of this application.

The transceiver 1303 is configured to communicate with another communication apparatus. For example, the communication apparatus 1300 is a terminal, and the transceiver 1303 may be configured to communicate with a network device or communicate with another terminal device. For another example, the communication apparatus 1300 is a network device, and the transceiver 1303 may be configured to communicate with a terminal device or communicate with another network device.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 and the processor 1301 may be integrated together, or may exist independently, and is coupled to the processor 1301 through the interface circuit (not shown in FIG. 13) of the communication apparatus 1300. This is not specifically limited in embodiments of this application.

It may be understood that the structure of the communication apparatus 1300 shown in FIG. 13 does not constitute a limitation on the communication apparatus. An actual communication apparatus may include more or fewer parts than those shown in the figure, or some parts may be combined, or different part arrangements may be used.

In addition, for technical effects of the communication apparatus 1300, refer to the technical effects of the method in the foregoing method embodiments. Details are not described herein again.

It should be understood that, the processor in embodiments of this application may be a central processing unit (central processing unit, CPU), or the processor may be another generalpurpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The generalpurpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than limitative descriptions, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a generalpurpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of a plurality of items (pieces). For example, at least one item (piece) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one place, or may be distributed on a plurality of network units. Some or all of the units may be selected depending on actual requirements to achieve the objectives of the solutions in embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first terminal, wherein the method comprises:
when the first terminal accesses a network over 3rd generation partnership project 3GPP access, sending, by the first terminal, an identifier of a second terminal to the network, wherein the second terminal has a non-3GPP access capability; and
receiving, by the first terminal, an identifier that is of a user plane network element supporting non-3GPP access and that is returned by the network, wherein the identifier of the user plane network element is identification information of the user plane network element connected to the second terminal through a non-3GPP access side.

2. The method according to claim 1, wherein sending, by the first terminal, the identifier of the second terminal to the network comprises:
sending, by the first terminal, a first non-access stratum NAS message to an access and mobility management network element, wherein the first NAS message is used by the first terminal to request to establish a session, and the first NAS message carries the identifier of the second terminal.

3. The method according to claim 2, wherein receiving, by the first terminal, the identifier that is of the user plane network element and that is returned by the network for the identifier of the second terminal comprises:
receiving, by the first terminal, a second NAS message returned by the access and mobility management network element, wherein the second NAS message indicates that the session is successfully established, and the second NAS message carries the identifier of the user plane network element.

4. The method according to claim 1, wherein sending, by the first terminal, the identifier of the second terminal to the network comprises:
sending, by the first terminal, a first message of a user plane to the user plane network element, wherein the first message carries the identifier of the second terminal.

5. The method according to claim 4, wherein receiving, by the first terminal, the identifier that is of the user plane network element and that is returned by the network for the identifier of the second terminal comprises:
receiving, by the first terminal, a second message that is of the user plane and that is returned by the user plane network element, wherein the second message carries the identifier of the user plane network element.

6. The method according to any one of claims 1 to 5, wherein when the first terminal and the second terminal are different terminals, the method further comprises:
obtaining, by the first terminal, the identifier of the second terminal from the second terminal.

7. The method according to claim 6, wherein obtaining, by the first terminal, the identifier of the second terminal from the second terminal comprises:
establishing, by the first terminal, a connection to the second terminal;
requesting, by the first terminal from the second terminal through the connection, information that identifies the second terminal; and
receiving, by the first terminal through the connection, the identifier that is of the second terminal and that is returned by the second terminal.

8. The method according to any one of claims 1 to 7, wherein when the first terminal and the second terminal are different terminals, the method further comprises:
sending, by the first terminal to the second terminal, at least one of the identifier of the user plane network element and a security vector that corresponds to the second terminal, wherein the security vector is information used when the second terminal establishes a secure connection of the user plane through the non-3GPP access side connection.

9. The method according to claim 8, wherein the security vector is carried in a NAS message or a message of the user plane that is sent by the network to the first terminal.

10. The method according to any one of claims 1 to 5, wherein when the first terminal and the second terminal are a same terminal, the method further comprises:
when the first terminal accesses the network over non-3GPP access, establishing, by the first terminal, a connection to the user plane network element based on the identifier of the user plane network element.

11. The method according to claim 10, wherein establishing, by the first terminal, the connection to the user plane network element based on the identifier of the user plane network element comprises:
establishing, by the first terminal by using a security vector corresponding to the first terminal, a secure connection to the user plane network element based on the identifier of the user plane network element.

12. The method according to claim 11, wherein the security vector is pre-configured locally in the first terminal, or the security vector is carried in a NAS message or a message of the user plane that is sent by the network to the first terminal.

13. A communication method, applied to a second terminal, wherein the method comprises:
receiving, by the second terminal, an identifier of a user plane network element supporting non-3GPP access, wherein the identifier of the user plane network element is identification information of the user plane network element connected to the second terminal through a non-3rd generation partnership project 3GPP access side; and
when the second terminal accesses a network over non-3GPP access, establishing, by the second terminal, a connection to the user plane network element based on the identifier of the user plane network element.

14. The method according to claim 13, wherein receiving, by the second terminal, the identifier of the user plane network element comprises:
receiving, by the second terminal, the identifier of the user plane network element from an application function or a first terminal.

15. The method according to claim 14, wherein the method further comprises:
sending, by the second terminal, an identifier of the second terminal to the first terminal.

16. The method according to any one of claims 13 to 15, wherein establishing, by the second terminal, the connection to the user plane network element based on the identifier of the user plane network element comprises:
establishing, by the second terminal by using a security vector corresponding to the second terminal, a secure connection to the user plane network element based on the identifier of the user plane network element.

17. The method according to claim 16, wherein the security vector is pre-configured locally in the second terminal, or the security vector is carried in a message from the application function or the first terminal.

18. A communication method, applied to a user plane network element supporting non-3GPP access, wherein the method comprises:
receiving, by the user plane network element, an identifier of a second terminal, wherein the second terminal has a non-3GPP access capability; and
sending, by the user plane network element, an identifier that is of the user plane network element and that is allocated to the second terminal, wherein the identifier of the user plane network element is identification information of the user plane network element connected to the second terminal through a non-3GPP access side.

19. The method according to claim 18, wherein receiving, by the user plane network element, the identifier of the second terminal comprises:
receiving, by the user plane network element, a packet forwarding control protocol PFCP session establishment request message from a session management network element, wherein the PFCP session establishment request message carries the identifier of the second terminal.

20. The method according to claim 19, wherein sending, by the user plane network element, the identifier that is of the user plane network element and that is allocated to the second terminal comprises:
sending, by the user plane network element, a PFCP session establishment response message to the session management network element, wherein the PFCP session establishment response message carries the identifier of the user plane network element.

21. The method according to claim 19 or 20, wherein the PFCP session establishment request message further carries a security vector corresponding to the second terminal.

22. The method according to claim 18, wherein receiving, by the user plane network element, the identifier of the second terminal comprises:
receiving, by the user plane network element, a first message of a user plane from a first terminal, wherein the first message carries the identifier of the second terminal.

23. The method according to claim 22, wherein sending, by the user plane network element, the identifier that is of the user plane network element and that is allocated to the second terminal comprises:
sending, by the user plane network element, a second message of the user plane to the first terminal, wherein the second message carries the identifier of the user plane network element.

24. The method according to claim 22 or 23, wherein the method further comprises:
sending, by the user plane network element, a PFCP request message to a session management network element, wherein the PFCP request message carries the identifier of the second terminal; and
receiving, by the user plane network element, a PFCP response message from the session management network element, wherein the PFCP response message carries a security vector corresponding to the second terminal.

25. The method according to claim 24, wherein the second message further carries the security vector.

26. The method according to any one of claims 18 to 25, wherein the method further comprises:
establishing, by the user plane network element, a connection to the second terminal that is over non-3GPP access.

27. The method according to claim 26, wherein establishing, by the user plane network element, the connection to the second terminal that is over non-3GPP access comprises:
receiving, by the user plane network element, a secure connection establishment request that is sent by the second terminal over non-3GPP access; and
establishing, by the user plane network element, a secure connection to the second terminal by using the security vector corresponding to the second terminal.

28. The method according to any one of claims 18 to 27, wherein the first terminal and the second terminal are different terminals, or the first terminal and the second terminal are a same terminal.

29. A communication method, applied to a session management network element, wherein the method comprises:
receiving, by the session management network element, an identifier of a second terminal, wherein the second terminal has a non-3GPP access capability;
obtaining, by the session management network element based on the identifier of the second terminal, an identifier of a user plane network element supporting non-3GPP access, wherein the identifier of the user plane network element is identification information of the user plane network element connected to the second terminal through a non-3GPP access side; and
sending, by the session management network element, the identifier of the user plane network element.

30. The method according to claim 29, wherein obtaining, by the session management network element, the identifier of the user plane network element based on the identifier of the second terminal comprises:
selecting, by the session management network element, the user plane network element based on the identifier of the second terminal; and
determining, by the session management network element, the identifier of the user plane network element; or obtaining, by the session management network element, the identifier of the user plane network element from the user plane network element.

31. The method according to any one of claims 1 to 30, wherein the identifier of the second terminal is used to select a network element of a user plane for the second terminal.

32. A communication apparatus, wherein the apparatus comprises a module configured to perform the method according to any one of claims 1 to 31.

33. A communication apparatus, wherein the communication apparatus comprises a processor and a memory; the memory is configured to store computer instructions; and when the processor executes the instructions, the communication apparatus is enabled to perform the method according to any one of claims 1 to 31.

34. A computer-readable storage medium, wherein the computer-readable storage medium comprises a computer program or instructions; and when the computer program or the instructions are run on a computer, the computer is enabled to perform the method according to any one of claims 1 to 31.
